# EUROPEAN PATENT APPLICATION

(11) **EP 4 775 634 A1**
(43) Date of publication of application: **15.07.2026**
(21) Application number: 25151860.1
(22) Date of filing: 14.01.2025
(51) Int. Cl.: C08L 69/00, C08K 3/22

(54) **FLAME RETARDANT GLASS FIBER REINFORCED POLYCARBONATE COMPOSITIONS**

(71) Applicant: Trinseo Europe GmbH, 8808 Pfäffikon (CH)
(72) Inventor: LI, Yichen, Tsing Yi Island Hong Kong (HK); WU, Hung Chang, Tsing Yi Island Hong Kong (HK); LAM, Chin Ming, Tsing Yi Island Hong Kong (HK)
(74) Representative: Casalonga

(57) **Abstract**

Disclosed are flame retardant glass fiber reinforced polycarbonate compositions that are not formulated with PFAS additives wherein the compositions exhibit high levels of flame retardance and excellent physical properties. Disclosed are compositions comprising a) one or more polycarbonates; b) one or more non-halogen containing flame retardants; c) one or more glass fibers; and d) one or more of one or more polysiloxane impact modifiers and one or more polysiloxane polycarbonate copolymers. Disclosed are methods of preparing such compositions. Disclosed are structures prepared from the disclosed compositions.

## Description

### TECHNICAL FIELD

Disclosed are flame retardant glass fiber reinforced polycarbonate compositions that are not formulated with PFAS additives wherein the compositions exhibit high levels of flame retardance and excellent physical properties. Disclosed are compositions comprising a) one or more polycarbonates; b) one or more non-halogen containing flame retardants; c) one or more glass fibers; and one or more of d) one or more polysiloxane impact modifiers and/or e) one or more polysiloxane polycarbonate copolymers. Disclosed are methods of preparing such compositions. Disclosed are structures prepared from the disclosed compositions.

### BACKGROUND

Polycarbonate and copolymers containing carbonate units are utilized in a variety of molded structures. Polycarbonates and copolymers containing carbonate units form molded structures that are rigid. The molded structures may be used for a variety of uses, including cases for electronics, automobile parts, medical devices, home appliances, loud-speakers, home furnishings and the like. Fire retardancy of such structures is an important safety consideration. The market continues to demand improved fire retardancy while maintaining the premium properties of molded structures. The use of PFAS compounds in polycarbonate compositions as flame retardants is common and such compounds provide excellent flame retardancy, see US 10100192 and US 2023/0167296. There has been concern related to the use of PFAS compounds.

What is needed are polycarbonate compositions which do not contain PFAS compound additives having the desired fire retardancy while maintaining the premium properties of molded products containing polycarbonates, such as excellent tensile strength at yield, tensile strength at break, tensile elongation at yield, tensile elongation at break, Notched Izod impact strength, and the like. What are also needed are molded compositions prepared from such compositions that exhibit improved fire retardancy and such premium properties.

### SUMMARY

Disclosed are a composition comprising a) one or more polycarbonates; b) one or more non-halogen containing flame retardants; c) one or more glass fibers; and one or more of d) one or more polysiloxane impact modifiers and e) one or more polysiloxane polycarbonate copolymers. The disclosed composition may comprise a) from about 40 to about 99 percent by weight of the one or more polycarbonates; b) from about 0.1 to less than about 20 percent by weight of one or more non-halogen containing flame retardants; c) from about 1.0 to about 50 percent by weight of one or more glass fibers; d) from about 0 to about 10 percent by weight of one or more polysiloxane impact modifiers; and e) from about 0 to about 90 one or more polysiloxane polycarbonate copolymers, wherein the amounts are by weight based on the weight of the composition, and the total amount of polycarbonates stated may include the one or more polysiloxane polycarbonate copolymers. At least one of the d) one or more polysiloxane impact modifiers; or e) one or more polysiloxane polycarbonate copolymers may be present in an amount of greater than 0.

The polycarbonates may comprise one or more virgin polycarbonates, one or more post-consumer recycled polycarbonates, or combination thereof. The composition may comprise about 0 to about 99 percent by weight of one or more post-consumer recycled polycarbonates, based on the weight of the composition. The polycarbonates may be branched, linear, or a combination thereof. The one or more polycarbonates may contain substantially all polycarbonate units. The one or more polycarbonates may contain substantially all bisphenol polycarbonate units.

The one or more non-halogen containing flame retardants may be one or more phosphorus containing flame retardants. The one or more phosphorus containing flame retardants may comprise one or more of a phosphate ester, a phosphazene, or a combination thereof. The one or more phosphorus containing flame retardant may be one or more of 1, 3-phenylenetetrakis (2, 6-dimethylphenyl) ester, a bisphenol-A bis(diphenyl phosphate), hexa-phenoxy-cyclo-phosphazene, or a combination thereof.

The glass fiber may be long glass fibers, short glass fibers, or a combination thereof. The glass fiber may be circular or oval shaped. The glass fibers may be present in an amount of 0 to about 50 percent by weight, based on the composition.

The impact modifier may contain a siloxane core. The one or more impact modifiers may be a core shell rubber containing a siloxane core. The one or more impact modifiers may have an (meth)acrylate based shell. The one or more impact modifiers may be present in an amount of 0 to about 10 percent by weight, based on the weight of the composition.

The one or more polysiloxane polycarbonate copolymers may be present in an amount of 0 to about 90 percent by weight, based on the composition, wherein the total amount of polycarbonates stated includes the one or more polysiloxane polycarbonate copolymers.

The composition may comprise one or more inorganic particles. The one or more inorganic particles may comprise one or more carbon based particulates, metal oxides and metalloid oxides. The one or more inorganic particles may comprise one or more of carbon nanotubes, carbon black, titanium dioxide, magnesium oxide, silicon dioxide., mica, talc and wollastonite. The one or more metal oxides may comprise one or more of titanium dioxide, magnesium oxide and silicon dioxide. The one or more carbon based particulates may be carbon black or carbon nanotubes. The one or more inorganic particles may be present in an amount of greater than 0 to about 20 percent by weight, based on the weight of the composition.

The composition may further comprise one or more buffer compounds capable of stabilizing the molecular weight of the one or more polycarbonates. The buffer compounds may comprise one or more alkali metal phosphates such as one or more of distearyl pentaerythritol diphosphate, mono or dihydrogen phosphate and mono-, di-, or trihydrogen phosphate compounds. The one or more alkali metal phosphates may comprise one or more mono-, di-, or trihydrogen phosphate compounds. The one or more alkali metal phosphates may comprise sodium dihydrogen phosphate or disodium phosphate. The one or more buffer compounds may be present in an amount of from greater than 0 to about 0.2 percent by weight, based on the weight of the composition.

The composition may comprise: a) from about 40 to about 99 percent by weight of one or more polycarbonates; b) from about 0.1 to less than about 20 percent by weight of one or more non-halogen containing flame retardants; c) from about 1.0 to about 50 percent by weight of one or more glass fibers; d) from about 0 to about 10 percent by weight of one or more polysiloxane impact modifiers; e) from about 0 to about 90 one or more polysiloxane polycarbonate copolymers; f) from about 0 to about 20 percent by weight of one or more inorganic particles; and g) from about 0 to about 0.2 percent by weight of one or more buffer compounds, wherein the amounts are by weight based on the weight of the composition, and the total amount of polycarbonates stated may include the one or more polysiloxane polycarbonate copolymers.

Disclosed are articles prepared from the compositions disclosed herein.

Disclosed is a method comprising a) contacting the elements of any one of the compositions disclosed herein with intimate mixing at a temperature of about 250 °C or greater for about 10 seconds or greater, b) filling a mold with the mixed composition of a), and c) allowing the composition in the mold to form a solid article, and d) removing the formed article from the mold. The contacting with mixing may be performed in an extruder and the formed mixture may be moved from the extruder to a mold.

The compositions disclosed and articles prepared from the compositions disclosed do not contain PFAS containing additives, including PFAS containing anti-drip agents and charring salts. The articles may be used in automobiles, trains, buses, recreation vehicles (RVs) and the like.

### DETAILED DESCRIPTION

While the disclosure has been described in connection with certain embodiments, it is to be understood that the disclosure is not to be limited to the disclosed embodiments and is intended to cover various modifications and equivalent arrangements included within the scope of the appended claims, which scope is to be accorded the broadest interpretation to encompass all such modifications and equivalent structures as is permitted under the law.

One or more as used herein means that at least one, or more than one, of the recited components may be used as disclosed. Hydrocarbyl as used herein refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments may be straight or branched. The aliphatic and cycloaliphatic segments may include one or more double and/or triple bonds. Included hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. Valence as used herein means a covalent bond between a hydrocarbyl or hydrocarbylene group and another group such as a carbonyl, oxygen, nitrogen or sulfur containing group or atom, or the referenced base compound. As used herein percent by weight or parts by weight refer to, or are based on, the weight of the compositions unless otherwise specified. Tg is the temperature or temperature range at which a polymeric material shows an abrupt change in its physical properties, including, for example, mechanical strength. Tg can be determined by differential scanning calorimetry (DSC). Post-industrial as used herein refers to a source of a material that originates during the manufacture of a good or product. Post-consumer as used herein refers to a source of material that originates after the end consumer has used the material in a consumer good or product. Virgin polycarbonate is polycarbonate which has not been used in any previous composition. The term PFAS refers to per-and polyfluoroalkyl substances. Substantially all as used herein means 95 percent by weight or greater. 98 percent by weight or greater, 99 percent by weight or greater or 100 percent.

Disclosed are compositions which comprise a) one or more polycarbonates; b) one or more non-halogen containing flame retardants; c) one or more glass fibers; and one or more of d) one or more of one or more polysiloxane impact modifiers and one or more polysiloxane polycarbonate copolymers. Such compositions may contain one or more of one or more inorganic particles, one or more buffer compounds capable of stabilizing the molecular weight of the one or more polycarbonates, one or more antioxidants, one or more UV Absorbers, one or more mold release agents, and one or more colorants. The disclosed compositions are not formulated with added PFAS compounds. The presence of one or more polycarbonates, one or more non-halogen containing flame retardants, one or more glass fibers, one or more of one or more polysiloxane impact modifiers and one or more polysiloxane polycarbonate copolymers, and optionally one or more inorganic particles which comprise one or more carbon based particulates, metal oxides, metalloid oxides, facilitate preparing polycarbonate compositions which are not formulated with added PFAS compounds while exhibiting good fire retardance and excellent premium properties as disclosed herein.

Disclosed are compositions comprising a) from about 40 to 99 percent by weight of one or more polycarbonates, b) from about 0.1 to less than about 20 percent by weight of one or more non-halogen containing flame retardants, c) from about 1.0 to about 50 percent by weight of one or more glass fibers; d) from about 0 to about 10 percent by weight of one or more polysiloxane impact modifiers; and e) from about 0 to about 90 percent by weight of the one or more polysiloxane polycarbonate copolymers, based on the weight of the composition, and the total amount of polycarbonates stated may include the one or more polysiloxane polycarbonate copolymers, wherein at least one of the d) one or more polysiloxane impact modifiers; or e) one or more polysiloxane polycarbonate copolymers are present in an amount of greater than 0.

Disclosed are compositions comprising a) from about 40 to about 99 percent by weight of one or more polycarbonates; b) from about 0.1 to less than about 20 percent by weight of one or more non-halogen containing flame retardants, c) from about 1.0 to about 50 percent by weight of one or more glass fibers; d) from about 0 to about 10 percent by weight of one or more polysiloxane impact modifiers; e) from about 0 to about 90 one or more polysiloxane polycarbonate copolymers; f) from about 0 to about 20 percent of one or more inorganic particles; and g) from about 0 to about 0.2 percent by weight of the one or more buffer compounds; wherein the amounts are by weight based on the weight of the composition, and the total amount of polycarbonates stated may include the one or more polysiloxane polycarbonate copolymers. At least one of the d) one or more polysiloxane impact modifiers; or e) one or more polysiloxane polycarbonate copolymers may be present in an amount of greater than 0.

Disclosed are compositions comprising a) from about 40 to about 99 percent by weight of one or more polycarbonates; b) from about 0.1 to less than 20 percent by weight of one or more non-halogen containing flame retardants, c) from about 1.0 to about 50 percent by weight of one or more glass fibers; d) from about 0.5 to about 10 percent by weight of one or more polysiloxane impact modifiers, wherein amounts are by weight based on the weight of the composition.

Disclosed are compositions comprising a) from about 40 to about 99 percent by weight of one or more polycarbonates; b) from about 0.1 to less than about 20 percent by weight of one or more non-halogen containing flame retardants, c) from about 1.0 to about 50 percent by weight of one or more glass fibers; e) from greater than 1.0 to about 90 one or more polysiloxane polycarbonate copolymers, wherein the amounts are by weight based on the weight of the composition, and the total amount of polycarbonates stated may include the one or more polysiloxane polycarbonate copolymers

Polycarbonate as used herein means a polymer containing carbonate units. Such polymers may be homopolymers consisting essentially of carbonate monomer units (substantially all or 100 percent of carbonate monomer units) or copolymers containing one or more other monomer units (co-monomer units) and carbonate units. Such copolymers may be block copolymers containing two or more blocks of different monomer units or may be random copolymers with the different monomer units randomly located along the polymer backbone. The other monomer units may comprise any monomer units that do not negatively impact the inherent properties of polycarbonates, for instance heat resistance, impact resistance, moldability, flexural modulus, bending strength, haze and transparency, where required for the intended use. Among exemplary comonomer units are ester units, polysiloxane units, and the like. The amount of carbonate monomer units in copolycarbonates is selected such that the resulting polymer retains the desirable properties of polycarbonates, as disclosed herein. The copolycarbonates may contain greater than 50 mole percent carbonate monomer units, about 75 mole percent or greater carbonate monomer units, about 80 mole percent or greater carbonate monomer units or about 85 mole percent or greater carbonate monomer units. The copolycarbonates may contain 100 percent or less carbonate monomer units, about 99 mole percent or less carbonate monomer units, about 97 mole percent or less carbonate monomer units or about 95 mole percent or less carbonate monomer units. The copolycarbonates may contain about 1 mole percent or greater co-monomer monomer units, about 3 mole percent or greater co-monomer monomer units or about 5 mole percent or greater co-monomer monomer units. The copolycarbonates may contain less than 50 mole percent co-monomer monomer units, about 25 mole percent or less co-monomer monomer units, about 20 mole percent or less co-monomer monomer units or about 15 mole percent or less co-monomer monomer units. The polycarbonate units may contain aromatic units in the backbone of the polymer.

The production of polycarbonates is affected, for example, by the reaction of diphenols with carbonic acid halides, preferably phosgene, and/or with aromatic dicarboxylic acid dihalides, preferably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols. Diphenols useful to produce the aromatic polycarbonates and/or aromatic polyester carbonates may correspond to formula I: 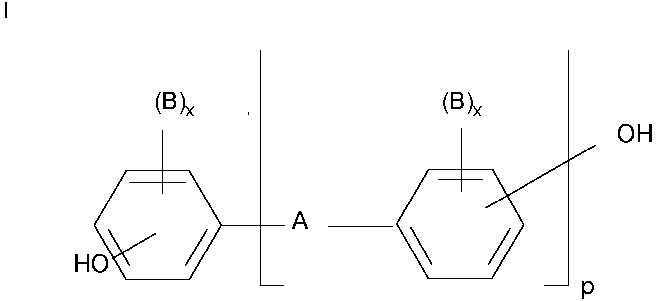 wherein A denotes a single bond, a C ₁₋₅ alkylene, a C ₂₋₅ alkylidene, a C ₅₋₆ cycloalkylidene, -O-, -SO-, -CO-, -S-, -SO₂-, or a C ₆₋₁₂ arylene, on to which other aromatic rings, which optionally contain hetero atoms, may be condensed, or a radical of formula II: 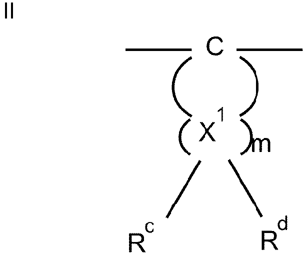 or formula III: 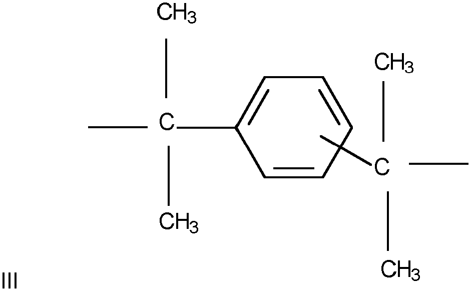 wherein B in each case is independently hydrogen, a C ₁₋₁₂ alkyl, preferably methyl, or a halogen, preferably chlorine and/or bromine; x in each case is mutually independently 0, 1, or 2; p is 0 or 1; R^{c} and R^{d} are mutually independent of each other and are individually selectable for each X¹ and are hydrogen or a C₁ - C₆ alkyl, preferably hydrogen, methyl or ethyl; X¹ denotes carbon; and m denotes an integer from 4 to 7, preferably 4 or 5, with the proviso that R^{c} and R^{d} simultaneously denote an alkyl on at least one X¹ atom.

Exemplary diphenols are hydroquinone, resorcinol, dihydroxybiphenyls, bis (hydroxyphenyl)-C ₁₋₅ alkanes, bis(hydroxyphenyl)-C ₅₋₆ cycloalkanes, bis(hydroxyl-phenyl) ethers, bis(hydroxyphenyl)sulfoxides, bis(hydroxyphenyl)ketones, bis(hydroxyl-phenyl) sulfones and 4,4"-bis(hydroxyphenyl)diisopropylbenzenes, as well as derivatives thereof which have brominated and/or chlorinated nuclei. Diphenols which are particularly preferred are 4,4'-dihydroxybiphenyl, bisphenol A, 2,4-bis(4-hydroxyphenyl)-2-methyl-butane, 1,1-bis (4-hydroxyphenyl)-cyclohexane, 1,1-bis(4-hydroxyphenyl)-3,3,5-trimethyl-cyclohexane, 4,4-dihydroxydiphenyl sulfide and 4,4-dihydroxydiphenyl sulfone, as well as di- and tetra-brominated or chlorinated derivatives thereof, such as 2,2-bis(3-chloro-4-hydroxy-phenyl)propane, 2,2-bis-(3,5-dichloro-4-hydroxyphenyl)propane or 2,2-bis(3,5-dibromo-4-hydroxyphenyl)propane. 2, 2-bis-(4-hydroxyphenyl) propane (bisphenol A) is particularly preferred. The diphenols may be used individually or as arbitrary mixtures. The diphenols are known in the literature or may be obtained by methods known in the literature. Apart from bisphenol A homopolycarbonates, exemplary polycarbonates include copolycarbonates of bisphenol A with up to 15 mole percent, with respect to the molar sums of the diphenols, of other diphenols which are disclosed, such as 2,2-bis(3,5-dibromo-4-hydroxyphenyl)-propane.

Exemplary chain terminators for the production of the polycarbonates include phenolic compounds, exemplary phenolic compounds include phenol, p-chlorophenol, p-tert-butylphenol, 4-(1,3-dimethyl-butyl)-phenol and 2,4,6-tribromophenol; long chain alkyl phenols, such as monoalkylphenols or dialkylphenols which contain a total of 8 to 20 carbon atoms in their alkyl substituents, exemplary are 3,5-di-tert-butyl-phenol, p-iso-octylphenol, p-tert-octylphenol, p-dodecylphenol, 2-(3,5-dimethylheptyl)-phenol and 4-(3,5-dimethylheptyl)-phenol. The amount of chain terminators used may be about 0.1 mole percent or greater based on the molar sum of the diphenols used in each case. The amount of chain terminators used may be about 10 mole percent or less based on the molar sum of the diphenols used in each case.

The polycarbonates may be branched, for example by the incorporation of about 0.05 to about 2.0 mole percent, with respect to the sum of the diphenols used, of trifunctional compounds or of compounds with a functionality higher than three, for example those which contain four or more phenolic groups. Branched polycarbonates useful for the compositions disclosed may be prepared by known techniques, for example several methods are disclosed in USP 3,028,365; 4,529,791; and 4,677,162; which are hereby incorporated by reference in their entirety. Exemplary branching agents include tri- or multi-functional carboxylic acid chlorides, such as trimesic acid trichloride, cyanuric acid trichloride, 3,3'-,4,4'-benzophenone tetracarboxylic acid tetra chloride, 1,4,5,8-naphthalene-tetracarboxylic acid tetrachloride or pyromellitic acid tetra chloride, in amounts of about 0.01 to about 1.0 mole percent (with respect to the dicarboxylic acid dichlorides used) or tri- or multi-functional phenols such as phloroglucinol, 4,6-dimethyl-2,4,6-tris(4-hydroxyphenyl)-2-heptene, 4,4-dimethyl-2,4,6-tris (4-hydroxy phenyl) heptane, 1,3,5-tris(4-hydroxyphenyl)-benzene, 1,1,1-tris(4-hydroxy phenyl)ethane, tris(4-hydroxyphenyl)-phenylmethane, 2,2-bis[4,4-bis(4-hydroxyphenyl) cyclohexyl]propane, 2,4-bis[1-(4-hydroxyphenyl)-1-methyl-ethyl]phenol, tetrakis(4-hydroxy phenyl)-methane, 2,6-bis(2-hydroxy-5-methyl-benzyl)-4-methyl-phenol, 2-(4-hydroxyphenyl) -2-(2,4-dihydroxyphenyl)propane, or tetrakis(4-[1-(4-hydroxyphenyl)-1-methylethyl]-phenoxy)-methane in amounts of about 0.01 to about 1.0 mole percent with respect to the diphenols used. Phenolic branching agents may be placed in the reaction vessel with the diphenols. Acid chloride branching agents may be introduced together with the acid chlorides.

Copolycarbonates may be prepared by known processes. The polysiloxane monomer units may be utilized in the polycarbonate containing polymer preparation process. For example, about 1 to about 25 parts by weight, about 2.5 to about 25 parts by weight (with respect to the total amount of diphenols to be used) of polydiorganosiloxanes comprising hydroxy-aryloxy terminal groups can also be used. These are known (see, USP 3,419,634) or may be produced by methods known in the literature. The ester forming monomers may be utilized in the polycarbonate containing polymer preparation process. Exemplary ester forming monomers include dicarboxylic acid halides and hydroxycarboxylic acids. The aromatic dicarboxylic acid dihalides used for the production of the aromatic polyester carbonates may be the diacid dichlorides of isophthalic acid, terephthalic acid, diphenyl ether-4,4'-dicarboxylic acid and naphthalene-2,6-dicarboxylic acid. Mixtures of the diacid dichlorides of isophthalic acid and terephthalic in a ratio from about 1:20 to about 20:1 may be used. A carbonic acid halide, such as phosgene, may be used in conjunction as a difunctional acid derivative during the production of the polyester carbonates. The aromatic polyester carbonates may also contain incorporated hydroxycarboxylic acids. The polyester carbonates may be either linear and/or may be branched. Branching agents are disclosed above.

Apart from the monophenols, exemplary chain terminators include chlorocarboxylic acid esters, as well as the acid chlorides of aromatic monocarboxylic acids which may optionally be substituted by C ₁₋₂₂ alkyl groups, or by halogen atoms, and also may include aliphatic C ₂₋₂₂ monocarboxylic acid chlorides. The amount of chain terminator may be about 0.1 to about 10 mole percent, with respect to the moles of diphenols in the case of phenolic chain terminators and with respect to the moles of dicarboxylic acid dichlorides in the case of monocarboxylic acid chloride chain terminators.

The polycarbonates or copolymers containing carbonate units may be derived from recycled materials, such as post-consumer recycled materials and/or post-industrial recycled materials. The polycarbonates or copolymers containing carbonate units may be one or more recycled polycarbonates. The one or more recycled polycarbonates may be one or more of one or more post-consumer recycled polycarbonates, or one or more post-industrial recycled polycarbonates. The composition may contain recycled polycarbonates in an amount up to 99 percent by weight based on the weight of the composition. The composition may contain recycled polycarbonates in an amount of about 99 percent by weight or less, 90 percent by weight or less, about 85 percent by weight or less or about 80 percent by weight or less based on the weight of the composition. The composition may contain recycled polycarbonates in an amount of 0 percent by weight or more, 10 percent by weight or more, about 30 percent by weight or more, about 50 percent by weight or more, or about 75 percent by weight or more based on the weight of the composition. The recycled material may be linear, branched or a mixture thereof. The recycled material may be branched. The recycled material may be in flake form. The recycled material may be recycled from bottles or other structures wherein the used structures are shredded into flake form. The recycled material may be formed into other structures such as pellets. The use of the recycled material in pellet form is the most efficient way to utilize the material. The recycled polycarbonates or copolymers containing carbonate units may contain impurities such as polyesters, for instance 0.1 to 1.0 or 0.1 to 0.25 percent by weight based on the recycled polycarbonates or copolymers containing carbonate units.

The composition may contain virgin polycarbonates or copolymers containing carbonate units in an amount of about 0 percent by weight or greater based on the composition, about 10 percent by weight or greater, about 20 percent by weight or greater, about 30 percent by weight or greater or about 40 percent by weight or greater. The composition may contain virgin polycarbonates or copolymers containing carbonate units in an amount of 100 percent by weight or less based on the composition, about 90 percent by weight or less, about 60 percent by weight or less or about 50 percent by weight or less.

The one or more polymers containing carbonate monomer units can comprise polycarbonates, co-polycarbonates or blends of polycarbonates and co-polycarbonates. The polycarbonates and/or co-polycarbonates may exhibit a weight average molecular weight sufficient to provide the desired properties to articles prepared from the polycarbonates and/or co-polycarbonates. The polycarbonates and/or co-polycarbonates may have a weight average molecular weights of about 5,000 or greater, about 15,000 or greater or about 20,000 or greater. The polycarbonates and/or co-polycarbonates may have a weight average molecular weight of about 60, 000 or less, about 40,000 or less, about 35,000 or less, or about 30,000 or less. Unless otherwise indicated, the polycarbonate and/or co-polycarbonate "molecular weight" herein refer to weight average molecular weights (Mw) determined by gel permeation chromatography (GPC) using laser scattering techniques with a bisphenol A polycarbonate standard and is given in units of grams per mole (g/mole).

The polycarbonates and/or copolymers used to prepare the compositions disclosed may have melt flow rates which provide the desired processing properties. The melt flow rates may be about 1 or greater, about 5 or greater, about 10 or greater or about 15 or greater. The melt flow rates may be about 70 or less, about 30 or less, about 28 or less, about 20 or less or about 15 or less. A mixture of polycarbonates and/or copolymers containing carbonate units with differing melt flow rates may be used to provide a composite melt flow rate to enhance processing of the compositions disclosed. The mixture of polycarbonates and/or copolymers containing carbonate units having different melt flow rates may contain polycarbonates and/or copolymers containing carbonate units having low melt flow rates and polycarbonates and/or copolymers containing carbonate units having high melt flow rates. Melt flow rates are determined by measuring the grams of a material which passes through a capillary having a diameter of 25.4 mm in a ten-minute period at 300 ° C under a load of 1.2, kilograms. The melt flow rates of the disclosed compositions may be about 1 gram/10 minutes or greater, about 3 grams/10 minutes or greater, about 5 grams/10 minutes or greater, 10 grams/10 minutes or greater or about 15 grams/10 minutes or greater. The melt flow rates of the disclosed compositions may be about 70 grams/10 minutes or less, about 30 grams/10 minutes or less, about 28 grams/10 minutes or less, about 22 grams/10 minutes or less, about 20 grams/10 minutes or less or about 10 grams/10 minutes or less. The melt flow rates of the disclosed compositions may be from about 3 grams/10 minutes to about 22 grams/10 minutes. The test protocol is based on ASTM D1238. The plastometer used in the method may have a capillary diameter of 9.5504 mm and bore die size of 2.095 mm.

The composition may comprise polycarbonates or copolymers containing carbonate units in an amount from about 40 percent by weight or greater, about 80 percent by weight or greater; or about 90 percent by weight or greater based on the weight of the composition. The composition may comprise polycarbonates or copolymers containing carbonate units in an amount from about 99 percent by weight or less, 85 percent by weight or less, or about 65 percent by weight or less based on the weight of the composition.

The polycarbonates may be linear, branched or a mixture thereof. The polycarbonates may be mixtures of linear and branched polycarbonates. The presence of branched polycarbonates may positively impact the flame retardant properties of the disclosed compositions. The amount of branched polycarbonates may be any amount which positively impacts the properties of the composition including the flame retardant properties and mechanical properties. The amount of the branched polycarbonates and/or copolymers containing carbonate units may be about 0 percent by weight or greater based on the weight of the composition containing polycarbonates and/or copolymers containing carbonate units, 5 percent by weight or greater, about 10 percent by weight or greater, 20 percent by weight or greater, 30 percent by weight or greater, 60 percent by weight or greater, 80 percent by weight or greater or 90 percent by weight or greater. The amount of the branched polycarbonates and/or copolymers containing carbonate units may be about 99 percent by weight or less based on the weight of the composition containing polycarbonates and/or copolymers containing carbonate units, 80 percent by weight or less or about 70 percent by weight or less, 40 percent by weight or less, 20 percent by weight or less or about 15 percent by weight or less. The amount of the linear polycarbonates and/or copolymers containing carbonate units may be about 0 percent by weight or greater based on the weight of the composition containing polycarbonates and/or copolymers containing carbonate units, 5 percent by weight or greater or about 10 percent by weight or greater. The amount of the linear polycarbonates and/or copolymers containing carbonate units may be about 99 percent by weight or less based on the weight of the composition containing polycarbonates and/or copolymers containing carbonate units, 80 percent by weight or less or about 70 percent by weight or less, 40 percent by weight or less, 20 percent by weight or less or about 15 percent by weight or less.

The composition may contain one or more compositions with polyorganosiloxane monomer units. The presence of polyorganosiloxane monomer units may enhance the flame retardancy of the composition. Polyorganosiloxane monomer units may be present in the form of one or more polysiloxane polycarbonate copolymers; and one or more siloxane-acrylate core shell rubbers having a siloxane core. Any one or more polyorganosiloxane monomer units which enhance the flame retardance of the polycarbonate composition may be utilized. The one or more polyorganosiloxane monomer units may correspond to the formula 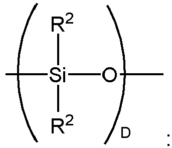 wherein R² and D are as described in this document. D is selected so as to provide an effective level of flame retardance to the composition. The value of D will therefore vary depending on the type and relative amount of each component in the composition, including the type and amount of polycarbonate, impact modifier, polysiloxane-polycarbonate copolymer, and other flame retardants. Suitable values for D may be determined by one of ordinary skill in the art without undue experimentation using the guidelines taught herein. D may have an average value of 2 to about 1000, about 3 to about 100, more specifically about 4 to about 75. In polysiloxane polycarbonate copolymers, D has an average value of about 40 to about 60, In polysiloxane polycarbonate copolymers, where D is of a lower value, e.g., less than about 40, it may be desirable to use a relatively larger amount of the polysiloxane-polycarbonate copolymer. Conversely, in polysiloxane polycarbonate copolymers where D is of a higher value, e.g., greater than about 40, it may be desirable to use a relatively smaller amount of the polysiloxane-polycarbonate copolymer.

The one or more silicone monomer units may be used in one or more of one or more polysiloxane polycarbonate copolymers; or one or more siloxane-acrylate core shell rubbers having a siloxane core.

The composition may contain one or more polysiloxane polycarbonate copolymers. The composition may contain 0 percent by weight or greater, about 1.0 percent by weight or greater, about 3.0 percent by weight or greater, about 5.0 percent by weight or greater, 10 percent by weight or greater, about 20 percent by weight or greater, or about 40 percent by weight or greater of the one or more polycarbonate polysiloxane copolymers based on the weight of the composition. The composition may contain about 90 percent by weight or less, about 85 percent by weight or less, about 75 percent by weight or less, about 65 percent by weight or about 50 percent by weight or less of the one or more polycarbonate polysiloxane copolymers based on the weight of the composition. The composition may contain about 0 to about 90 percent by weight, about 3.0 to about 85 percent by weight, about 10 to about 75 percent by weight, or about 20 to about 65 percent by weight of the one or more polycarbonate polysiloxane copolymers based on the weight of the composition. The composition may contain greater than 2.0 percent by weight of the one or more polycarbonate polysiloxane copolymers based on the weight of the composition when the composition does not contain one or more impact modifiers.

The one or more polycarbonate polysiloxane copolymers may comprise about 1.0 percent by weight or greater, about 5.0 percent by weight or greater, about 10 percent by weight or greater, or about 20 percent by weight or greater of one or more polysiloxane monomer units within the polycarbonate backbone. The one or more polycarbonate polysiloxane copolymers may comprise about 90 percent by weight or less, about 60 percent by weight or less, about 40 percent by weight or less, or about 20 percent by weight or less of one or more polysiloxane monomer units within the polycarbonate backbone. The one or more polycarbonate polysiloxane copolymers may comprise about 1.0 to about 90 percent by weight, about 5.0 to about 60 percent by weight, or about 10 to about 40 percent by weight of one or more polysiloxane monomer units within the polycarbonate backbone.

The composition may contain one or more impact modifiers. The terms impact modifiers and rubbers are used interchangeably. Various impact modifiers may be used in the compositions disclosed; such as diene rubbers, ethylene propylene rubbers, ethylene propylene diene (EPDM) rubbers, ethylene copolymer rubbers, acrylate rubbers, polyisoprene rubbers, silicon rubbers, silicon-acrylate rubbers, polyurethanes, thermoplastic elastomers, halogen containing rubbers, and mixtures thereof. Also suitable are inter-polymers of rubber-forming monomers with other copolymerizable monomers. The rubbers may be present in the formulated composition in sufficient amount to provide the desired impact properties to the composition. Desired impact properties include increased notched izod, charpy, gardner, tensile, falling dart, and the like. The composition may contain a mixture of one or more impact modifiers. When the composition contains the mixture of one or more impact modifiers it may be desirable for one or more of the impact modifiers within the mixture to be a siloxane-acrylate core shell rubber having a siloxane core.

The rubbers may be diene rubbers such as polybutadiene, polyisoprene, polypiperylene, polychloroprene, and the like or mixtures of diene rubbers, that is, any rubbery polymers of one or more conjugated 1,3-dienes, such as 1,3-butadiene. Such rubbers include homopolymers of 1,3-butadiene and copolymers of 1,3-butadiene with one or more copolymerizable monomers, such as vinylidene substituted aromatic (styrene). The diene rubber may be the homopolymer of 1,3-butadiene. Exemplary copolymers of 1,3-butadiene are block or tapered block rubbers of at least about 30 weight percent 1,3-butadiene, from about 50 weight percent, from about 70 weight percent, or from about 90 weight percent 1,3-butadiene and up to about 70 weight percent vinylidene substituted aromatic monomer, up to about 50 weight percent, up to about 30 weight percent, or up to about 10 weight percent vinylidene substituted aromatic monomer, weights based on the weight of the 1,3-butadiene copolymer.

The impact modifiers employed may be those polymers and copolymers which exhibit a second order transition temperature, sometimes referred to as the glass transition temperature (Tg), for the diene fragment which is not higher than 0° C or not higher than -20° C. as determined using conventional techniques, for example ASTM Test Method D 746-52 T. The diene rubber may have a cis content equal to or less than 99 percent or less than 97 percent. The cis content of the diene rubber may be equal to or greater than 20 percent or greater than 37 percent wherein the cis weight percent is based on the weight of the diene rubber. The rubber may be a 1,3-butadiene rubber having at least about 1 weight percent 1,2-vinyl or at least about 7 weight percent 1,2-vinyl based on the weight of the 1,3-butadiene rubber. The 1,3-butadiene rubber may have less than or equal to about 30 weight percent 1,2-vinyl or less than or equal to about 13 weight percent 1,2-vinyl based on the weight of the 1,3-butadiene rubber. The diene rubber may have a weight average molecular weight of at least about 100 kilogram per mole (kg/mole) or a weight average molecular weight of at least about a 300 kg/mole. The diene rubber may have a weight-average molecular weight equal to or less than about 900 kg/mole or a weight average molecular weight equal to or less than 600 kg/mole. The diene rubber having a solution viscosity of at least 10 centiStokes (cSt) (10 percent (%) solution in styrene) or a solution viscosity of about 30 cSt. The diene rubber may have a solution viscosity equal to or less than about 500 cSt or equal to or less than about 400 cSt. The rubber, with graft and/or occluded polymers if present, is dispersed in the continuous matrix phase as discrete particles. The rubber particles may comprise a range of sizes having a mono-modal, bimodal, or multimodal distribution. The average particle size of a rubber particle, as used herein, will, refer to the volume average diameter. The volume average diameter of a group of particles may be the same as the weight average. The average particle diameter measurement generally includes the polymer grafted to the rubber particles and occlusions of polymer within the particles. Unless otherwise specified, the rubber particle sizes disclosed and claimed herein are determined on a Coulter Multisizer II or II e with the ACCUCOMP^{™} Software Version 2.01. by the following method: about 3 granules of polymer samples (30-70 mg) are dissolved in 5 milliliters (ml) of Dimethyl Formamide (DMF), using an ultrasonic bath for agitation for approximately 15 to 20 minutes. 10 ml of an electrolyte solution (1 percent of NH₄SCN in DMF) is mixed with 0.2 ml of the sample solution. The coulter measuring stand is used with 20 micrometer Coulter tube and a 1.16 micrometer calibration material. The coincidence level indicator of the apparatus should read between 5 and 10 percent. If the reading is above 10 percent, dilute the sample in a beaker with electrolyte solution, or if it is too low, add more drops of the polymer solution in DMF. The volumetric mean particle size is reported. The average particle size of the rubber particles may be equal to or greater than about 0.05 micrometers (microns) (µm), equal to or greater than about 0.1 µm, and equal to or greater than about 0.5 µm. The average particle size of the rubber particles may be equal to or less than about 10 µm, equal to or less than about 5 µm, or equal to or less than about 4 µm.

The impact modifier may be butadiene- or styrene-butadiene rubber-based and methyl methacrylate-styrene-grafted impact modifiers having a core-shell structure (MBS), siloxane-acrylate rubbers having a core-shell structure, acrylate rubber-based core-shell impact modifiers, and the like. The butadiene- or styrene-butadiene rubber-based core-shell impact modifiers are butadiene- or styrene-butadiene rubber-based impact modifiers grafted with methyl methacrylate or methyl methacrylate-styrene copolymers, e.g., Kane Ace M732 available from Kaneka Japan and Paraloid^{™} EXL2650J, EXL2690 and EXL2691J available from Dow Chemical, and the like. Siloxane-acrylate rubbers having a core-shell structure may be produced from alkyl methacrylates and/or alkyl acrylates, crosslinkers, and grafting agents. Exemplary alkyl methacrylates and/or alkyl acrylates are C₁₋₅-alkyl esters, e.g., methyl ester, ethyl ester, n-butyl ester, tert-butyl ester, n-propyl ester, n-hexyl ester, n-octyl ester, n-lauryl ester, and 2-ethylhexyl ester; haloalkyl esters, preferably halo C₁₋₅-alkyl esters, e.g., chloroethyl acrylate, and mixtures of these monomers. Particularly preferred is n-butyl acrylate. A monomer having more than one polymerizable double bond may be used as the crosslinker for the polyalkyl(meth)acrylate-rubber component of siloxane-acrylate rubber. Examples of the crosslinking monomers are esters of unsaturated mono-carboxylic acids having 3 to 8 carbon atoms and unsaturated monohydric alcohols having 3 to 12 carbon atoms or saturated polyols having 2 to 4 OH-groups and 2 to 20 carbon atoms, e.g., ethylene glycol dimethacrylate, propanediol dimethacrylate, 1,3-butanediol dimethacrylate, and 1 ,4-butanediol dimethacrylate. Such crosslinkers may be used alone or as mixtures of at least two crosslinkers. Exemplary grafting agents are allyl methacrylate, triallylcyanurate, triallyl isocyanurate or mixtures thereof. The allyl methacrylate may further be used as the crosslinker. Such grafting agents may be used alone or as mixtures of at least two grafting agents. The crosslinker and grafting agent may be present in an amount of from about 0.1 wt.-% to about 20 wt.% based on the total weight of the polyalkyl(meth)acrylate-rubber component of siloxane-acrylate rubber. The core may be based on a siloxane rubber. Exemplary siloxane-acrylate rubbers include, for example, Metablen S-2100, S-2001, S-2006 and the like available from Mitsubishi Rayon. Kane Ace MR03 and the like available from Kaneka. The compositions may comprise the siloxane-acrylate rubber impact modifier preferably in an amount of from 1.0 wt.% to 10.0 wt.%, and more preferably from 1.0 wt.% to 6.0 wt.%, particularly preferred from 2.0 to 5.0 wt.% of the total weight of the composition. Exemplary acrylate rubber-based core-shell impact modifiers are acrylate rubber-based impact modifiers grafted with methyl methacrylate, including Paraloid^{™} EXL2311, EXL2313, EXL2315, EXL2300, EXL2330 and EXL2390 available from Dow; and Durastrength^{®} 410, 440 and 480 available from Arkema.

The impact modifier may be a siloxane-acrylate core shell rubber having a siloxane core (e.g. a silicone-based graft copolymer with a silicone core component). The siloxane core may be about 1.0 percent by weight or greater of the weight of the impact modifier, about 10 percent by weight or greater, or about 20 percent by weight or greater. The siloxane core may be about 99 percent by weight or less of the weight of the impact modifier, about 90 percent by weight or less, or about 80 weight percent or less. The siloxane core may be about 1.0 to about 99 weight percent by weight, about 10 to about 90 percent by weight, or about 20 to about 80 percent by weight of the weight of the impact modifier.

The compositions disclosed herein contain impact modifiers in an amount of 0 percent by weight of the compositions or greater, about 0.5 percent by or greater, about 1.0 percent by weight or greater, about 2.0 percent by weight or greater, or about 5.0 percent by weight or greater based on the weight of the composition. The compositions disclosed herein contain impact modifiers in an amount of about 10 percent by weight of the compositions or less, about 6 percent by weight or less, about 5 percent by weight or less, or about 1.0 percent by weight or less. Impact modifiers may impact the effectiveness of the flame retardants and the amount and choice of the flame retardant compounds may need to be adjusted upward to provide the desired flame retardant properties.

The disclosed composition may comprise one or more non-halogen containing flame retardants. The composition may comprise one or more flame retardants commonly used in polycarbonate compositions. Non-halogenated means that there are no halogen atoms contained in the flame retardant. The use of non-halogenated flame retardants means that no halogens are released during combustion of the compositions containing non-halogenated flame retardants. The flame retardant may be any flame retardant known for use in polycarbonate-based compositions which provide flame retardant properties, and which do not negatively impact the impact, heat resistance, flexural modulus, bending strength, haze and transparency of the composition. Flame retardants may be used in a sufficient amount to meet the flame retardancy requirements for the final use and in an amount that does not deleteriously impact the properties of articles prepared from the compositions.

The one or more non-halogen containing flame retardants may be one or more phosphorus containing flame retardants. The one or more phosphorus containing flame retardant may comprise a phosphate ester, a phosphazene, or a mixture thereof. Exemplary phosphorus flame retardants include phosphorous containing compounds, such as phosphate esters, such as oligomeric phosphates, poly(block-phosphonato-esters), and/or a poly(block-phosphonato-carbonates) see USP 7,645,850 which is incorporated in its entirety. Exemplary oligomeric phosphates include bisphenol-A bis(diphenyl phosphate) (BAPP). Exemplary additional fire retardants include 1, 3-phenylenetetrakis (2, 6-dimethylphenyl) ester (Daihachi PX-200).

The one or more non-halogenated flame retardants may be one or more phosphazenes. Any one or more phosphazenes which enhances fire retardancy may be used. The phosphazenes may comprise more than one phosphazene unit. A phosphazene is an organic compound having a -P=N- structure. The phosphazene may be a linear structure containing one or more phosphazene units or a cyclic structure containing structure containing one or more phosphazene units. The phosphorous atoms on the phosphazene structure may have bonded thereto one or more hydrocarbyloxy structures. The hydro-carbyloxy groups may be alkoxy, aryloxy, alkyl substituted aryloxy, alkoxy substituted aryloxy or halo substituted aryloxy. The hydrocarbyloxy groups may be aryloxy or alkyl substituted aryloxy. The hydrocarbyloxy groups may be phenoxyoxy or alkyl substituted phenoxy. The alkyl groups may be C ₁₋₁₀ alkyl, C ₁₋₃ alkyl or methyl or ethyl. The cyclic phosphazene compounds may contain 1 or more phosphazene units or 3 or more phosphazene units. The cyclic phosphazene compounds may contain 25 or less phosphazene units, 10 or less phosphazene units or 5 or less phosphazene units. The linear phosphazene compounds may contain 1 or more phosphazene units, 3 or more phosphazene units, 5 or more phosphazene units or 6 or more phosphazene units. The linear phosphazene compounds may contain 10,000 or less phosphazene units, 1,000 or less phosphazene units, 100 or less phosphazene units, or 25 or less phosphazene units. Exemplary cyclic phosphazenes include phenoxy cyclotriphosphazene, octaphenoxy cyclotetraphosphazene, hexa-phenoxy-cyclo-phosphazene, and decaphenoxy cyclopentaphosphazene. The phosphazene compounds may be crosslinked. The phosphazene compounds may be crosslinked by a bisphenol compound such as a 4,4'-diphenylene group, such as a 4,4'-sulfonyldiphenylene (bisphenol S residue), 2,2-(4,4'-diphenylene), isopropylidene group, 4,4'-oxydiphenylene group, and 4,4'-thiodiphenylene group. The phenylene group content of the crosslinked phenoxyphosphazene compound is generally 50 to 99.9 percent by weight or 70 to 90 percent by weight. The crosslinked phenoxyphosphazene compound may not have any free hydroxyl groups in the molecule.

The polymeric composition may comprise one or more phosphate ester flame retardants and one or more phosphazene flame retardants.

The one or more non-halogenated flame retardants may be present in an amount of about 0.1 percent by weight or greater based on the weight of the composition containing polycarbonates and/or copolymers containing carbonate units, about 0.1 percent by weight or greater, about 2 percent by weight or greater or about 5 percent by weight or greater. The one or more flame retardants may be present in an amount of about 20 percent by weight or less based on the weight of the composition, about 15 percent by weight or less or about 10 percent by weight or less.

The disclosed composition may contain one or more glass fibers. The one or more glass fibers may be short glass fibers, long glass fibers, or a combination thereof. The glass fibers may improve the strength of the polycarbonate composition and/or may reduce the coefficient of linear thermal expansion of the composition. The glass fibers may be filament glass rovings naturally cut during twin screw extrusion. The one or more glass fibers may be a continuous glass fiber or a glass fabric. The glass fibers may be chopped glass fiber. The chopped glass fiber may be long chopped glass fibers, short chopped glass fibers, or a combination thereof. The glass fibers may be any length that positively impacts the flame retardant properties of the composition. The glass fibers may be circular or oval shaped. The glass fibers may be post-industrial recycled glass fiber.

The composition may comprise one or more glass fibers in an amount that positively impacts the flame retardant properties of the composition. The composition may comprise one or more glass fibers in an amount of 1.0 percent by weight or greater, about 5.0 percent by weight or greater, about 10 percent by weight or greater, or about 15 percent by weight or greater based on the weight of the composition. The composition may comprise glass fibers in an amount of about 50 percent by weight or less, 45 percent by weight or less, or about 20 percent by weight or less based on the weight of the composition. The composition may comprise one or more glass fibers in an amount of 1.0 percent by weight to about 50 percent by weight, about 5.0 percent by weight to about 45 percent by weight, or about 10 percent by weight to about 40 percent by weight, based on the weight of the composition.

The compositions disclosed may contain one or more inorganic particles. Any inorganic particles which enhance the flame retardant and mechanical properties of the composition may be utilized. The one or more inorganic particles may be one or more carbon based particulates, metal oxides and metalloid oxides. Exemplary metal or metalloid oxides include group 3 or 4 metal or metalloid oxides and mixtures thereof which may be synthetic or naturally occurring. Exemplary metal or metalloid oxides include TiO₂, MgO, SiO₂, Fe₂O₃, Al₂O₃ and the like. Exemplary metal or metalloid oxides include TiO₂, MgO and SiO₂. The one or more metal or metalloid oxides may be a mixture of metal and/or metalloid oxides, such as talc which contains MgO and SiO₂, mica, which contains silica and oxygen, and wollastonite calcium silicates. The one or more carbon based particulates may be any particulate carbon materials which improve the flame retardancy of the compositions disclosed herein. Exemplary carbon based particulates may be carbon black or carbon nanotubes. The one or more carbon compounds, metals or metalloid oxides may be present in a sufficient amount to enhance the flame retardancy and mechanical properties of the composition. The one or more carbon based particulates, metal or metalloid oxides may be present in an amount sufficient to provide a flame retardancy rating of V0@1.5 mm. The one or more carbon based particulates, metal or metalloid oxides may be present in an amount of about 0 weight percent by weight or greater based on the weight of the composition, about 0.2 percent by weight or greater, about 0.3 percent by weight or greater or about 0.5 percent by weight or greater. The one or more carbon based particulates, metal or metal oxides may be present in an amount of about 20 weight percent by weight or less based on the weight of the composition, about 10 percent by weight or less, about 5 percent by weight or less, about 3 percent by weight or less or about 2 percent by weight or less. The one or more carbon based particulates, metal or metal oxides may be nanoparticles. The particle size may be any particle size which enhances the flame retardancy rating of the compositions. The particle size may be about 0.005 micrometers or more, about 0.01 micrometers or more, about 0.2 micrometers or more or about 0.35 micrometers or more. The particle size may be about 20.0 micrometers or less, about 2.0 micrometers or less or about 1.0 micrometers or less. The particle size may be determined using the laser diffraction technique described in ISO13322. The particle size determined is the average diameter.

The compositions disclosed herein may contain one or more buffer compounds, buffer system. Any buffer system which enhances the stability of the molecular weight of the polycarbonate may be utilized. A buffer system as described herewith may be any compound that donates protons (i.e., H⁺ or hydronium ion), accepts protons (i.e., H⁺ or hydronium ion), or both. The buffer system may comprise a weak acid and a conjugate base. The buffer system may resist pH changes upon the addition of basic or acidic components. The buffer system may be characterized based on the total number of protons (i.e., H⁺ or hydronium ion), hydroxyl groups (i.e., hydroxide or OH⁻), or both. The buffer system may include one or more buffer compounds that are monoprotic, diprotic, triprotic, or polyprotic. The buffer system may proportionally stabilize polycarbonates based on the total amount of buffer system present based on the total weight of the composition. A buffer system as described herewith includes one or more buffers that has an acidic and basic functionality such that the pH of the composition may be directed to about neutral. The buffer system may include one or more buffer compounds, two or more buffer compounds, three or more buffer compounds, or a plurality of buffer compounds. The buffer system may comprise a single compound. The buffer system may comprise a pair of compounds. The buffer system may include an inorganic compound, an organic compound, or both. The buffer system may include a counterion. The buffer system is present in a concentration (i.e., percentage by weight of the total composition) sufficient to facilitate improved molecular weight stability of polycarbonate. The buffers system may include a buffer compound that is an inorganic compound or organic compound that balances the pH of the composition such that the optimal copolymerization and compounding is achieved. Inorganic compounds may include compounds that are free of saturated carbons (i.e., free of C-H bonds). The inorganic compounds may include carbon atoms that do not include hydrogen bonds. Organic compounds may include compounds that contain saturated carbons (i.e., contains C-H bonds). The buffer compounds may include acetates, sulfonates, phosphates, ammonia, formates, or any combination thereof. The buffer system may include buffer compounds that are aromatic or aliphatic. The buffer system may include pairs of buffer compounds that are weak acids and conjugate bases. The buffer compounds may be chosen based on a pKa that is about neutral. The buffer compounds may control the pH of water to about neutral. The buffer system may include a Good's buffer. Organic compounds may include 2-(N-morpholino)ethanesulfonic acid (MES), 2-[Bis(2-hydroxyethyl)amino]-2-(hydroxymethyl) propane-1,3-diol (Bis-Tris Methane), 2-[(2-amino-2-oxoethyl)-(carboxy methyl) mino]acetic acid (ADA), N-(2-Acetamido)-2-aminoethanesulfonic acid (ACES), piperazine-N,N'-bis(2-ethanesulfonic acid) (PIPES), 2-Hydroxy-3-morpholino propanesulfonic acid (MOPSO), 1,3-bis(tris(hydroxymethyl)methylamino)propane (Bis-6-Tris Propane), N-N-Bis(2-hydroxyethyl)-2-aminoethanesuflonic acid (BES), MOPS, 2-[[1,3-dihydroxy-2-(hydroxymethyl)propan-2-yl]amino]ethanesulfonic acid (TES), 4-(2-hydroxy ethyl)-1-piperazineethanesulfonic acid (HEPES), 3-(N,N-Bis[2-hydroxyethyl]amino)-2-hydroxy ropanesulfonic acid (DIPSO), 4-(N-Morpholino)butanesulfonic acid (MOBS), 3-[[1,3-dihydroxy-2-(hydroxymethyl)propan-2-yl]amino]-2-hydroxypropane-1-sulfonic acid (TAPSO), 4-(2-Hydroxyethyl)piperazine-1-(2-hyrdoxypropansulfonic acid) (HEPPSO), POPSO, 3-[4-(2-Hydroxyethyl)piperazin-1-yl] propane-1-sulfonic acid (EPPS or HEPPS), N-(2-Hydroxy-1,1-bis(hydroxymethyl) ethyl) glycine (Tricine), Glycyl-glycine (Gly-Gly), 2-(Bis(2-hydroxyethyl)amino)acetic acid (Bicine), N-(2-Hydroxyethyl)piperazine-N'-(4-butanesulfonic acid) (HEPBS), [tris(hydroxymethyl) methylamino]propanesulfonic acid (TAPS), 2-Amino-2-methyl-1,3-propanediol (Ammediol or AMPD), N-tris(Hydroxymethyl)methyl-4-amino butanesulfonic acid (TABS), N-(1,1-Dimethyl-2-hydroxyethyl)-3-amino-2-hydroxypropane sulfonic acid (AMPSO), N-Cyclohexyl-2-amino ethanesulfonic acid (CHES), 3-(Cyclohexyl amino)-2-hydroxy-1-propanesulfonic acid (CAPSO), 2-Amino-2-methylpropan-1-ol (Aminomethyl propanol or AMP), N-cyclohexyl-3-aminopropanesulfonic acid (CAPS), 4-(Cyclohexylamino)-1-butanesulfonic acid (CABS), or any combination thereof. Inorganic compounds include metal phosphates, metal sulfonates, metal acetates, and metal formats.

The buffer system may comprise one or more alkali metal phosphates. Any alkali metal phosphates which enhance the thermal stability of the compositions may be used. The alkali metal phosphates may be sodium or potassium metal phosphates. Exemplary alkali metal phosphates may be one or more of distearyl pentaerythritol diphosphate, mono or dihydrogen phosphate and mono-, di-, or trihydrogen phosphate compounds. Exemplary alkali metal phosphates may be one or more of mono-, di-, or trihydrogen phosphate compounds. The alkali metal phosphate may be sodium dihydrogen phosphate. The alkali metal phosphates may be used in any amount which enhances the thermal stability of the compositions.

The composition may comprise about 0 percent by weight or greater based on the weight of the composition of one or more buffer compounds, about 0.01 percent by weight or greater, about 0.02 percent by weight or greater, or about 0.03 percent by weight or greater. The composition may comprise about 1.0 percent by weight or less based on the weight of the composition of one or more buffer compounds, about 0.5 percent by weight or less, about 0.2 percent by weight or less, or about 0.1 percent by weight or less.

The disclosed compositions contain one or more antioxidants. Antioxidants may be introduced into the compositions from ingredients utilized, such as the impact modifiers. The antioxidants may be added to the compositions separately. The antioxidants may be one or more of phenol, phosphorous, hydroquinone and alkylated hydroquinone, tocopherol, O- and N-benzyl compound, alkylidenebisphenol, hydroxy benzylated malonate, aromatic hydroxybenzyl compound, triazine compound, benzyl phosphonate, acylaminophenol, esters and amides of propionic acid, ascorbic acid, or aminic based antioxidants. The antioxidant may be one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants. The antioxidants may be one or more of one or more of phenol based compounds, and one or more phosphite (phosphorous) based antioxidants.

Phenol based antioxidants include 2,6-di-tert-butyl-4-methylphenol; 2,6-diphenyl-4-methoxyphenol; 2,2'-methylenebis (6-tert-butyl-4-methylphenol); 2,2'-methylenebis(6-tert-butyl-4-methylphenol); 2,2'-methylene bis [4-methyl-6-(a-methylcyclohexyl)phenol]; 1,1-bis (5-tert-butyl-4-hdyroxy-2-methyl phenyl) butane; 2,2'-methylenebis(4-methyl-6-cyclohexyl phenol); 2,2'-methylenebis(4-methyl-6-nonylphenol); 1,1,3-tris(5-tert-butyl-4-hydroxy-2-methylphenyl) butane; 2,2-bis(5-tert-butyl-4-hydroxy-2-methylphenyl)-4-n-dodecylmercapto butane; ethylene glycol bis[3,3-bis(3-tert-butyl-4-hdyroxyphenyl) butyrate]; 1,1-bis(3,5-dimethyl-2-hydroxyphenyl)-3-(n-dodecylthio)butane; 4,4'-thiobis(6-tert-butyl-3-methyl phenol); 1,3,5-tris (3, 5-di-tert-butyl-4-hydroxybenzyl)-2,4,6-trimethylbenzene; dioctadecyl 2,2-bis(3,5-di-tert-butyl- 4-hydroxybenzyl) malonate ester; n-octadecyl-3-(4-hydroxy-3,5-di-tert-butylphenyl) propionate; tetrakis[methylene (3,5-di-tert-butyl-4-hydroxy hydrocinnamate) ]methane; and pentaerythritol tetrakis(3-(3,5-di-tert-butyl-4-hydroxyphenyl) propionate. Hydroquinone and alkylated hydroquinone-based antioxi dants include 2,6-di-tert-butyl-4-methoxyphenol, 2,5-di-tert-butylhydroquinone, 2,5-di-tert-amyl hydroquinone, 2,6-di phenyl 4-octadecyloxyphenol, 2,6-di-tert-butylhydroquinone, 2,5-di-tert-butyl-4-hydroxy anisole, 3,5-di-tert-butyl-4-hydroxyanisole, 3,5-di-tert-butyl-4-hydroxyphenyl stearate, bis (3,5-di-tert-butyl-4-hydroxyphenyl) adipate. Tocopherol based antioxidants include α-tocopherol, β-tocopherol, γ-tocopherol, δ-tocopherol and mixtures thereof (vitamin E). O- and N-benzyl compounds, based antioxidants include for example 3,5,3',5'-tetra-tert-butyl-4,4'-dihydroxydibenzyl ether, tris(3,5-di-tert-butyl-4-hydroxybenzyl) amine. Alkylidenebisphenol, based antioxidants include, 2,2'-methylenebis(6-tert-butyl-4-methyl phenol), 2,2'-methylenebis(6-tert-butyl-4-ethylphenol), 2,2'-methylenebis[4-methyl-6-(α-methyl cyclo hexyl) phenol], 2,2'-methylenebis(4-methyl-6-cyclohexylphenol), 2,2'-methylene bis(6-nonyl-4-methylphenol), 2,2'-methylenebis(4,6-di-tert-butylphenol), 2,2'-ethylidenebis (4,6-di-tert-butylphenol), 2,2'-ethylidene bis(6-tert-butyl-4-isobutylphenol), 2,2'-methylene bis[6-(α-methylbenzyl)-4-nonylphenol], 2,2'-methylene bis[6-(α,α-dimethyl benzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl) butane, 2,6-bis(3-tert-butyl-5-methyl-2-hydroxybenzyl)-4-methylphenol, 1,1,3-tris(5-tert-butyl-4-hydroxy-2-methyl phenyl) butane, ethylene glycol bis[3,3-bis(3'-tert-butyl-4'-hydroxy phenyl) butyrate], bis[2-(3'-tert-butyl-2'-hydroxy-5'-methylbenzyl)-6-tert-butyl-4-methyl phenyl] tere phthalate, 1,1-bis-(3,5-dimethyl-2-hydroxyphenyl)butane, 2,2-bis(3,5-di-tert-butyl-4-hydroxy phenyl)propane, 1,1,5,5-tetra(5-tert-butyl-4-hydroxy-2-methylphenyl) pentane, Hydroxy benzylated malonate based antioxidants include dioctadecyl-2,2-bis(3,5-di-tert-butyl-2-hydroxybenzyl)malonate, di-octadecyl-2-(3-tert-butyl-4-hydroxy-5-methyl benzyl)malonate, bis[4-(1,1,3,3-tetramethyl butyl)phenyl]-2,2-bis(3,5-di-tert-butyl-4-hydroxy benzyl)malonate. Aromatic hydroxybenzyl based antioxidants include 1,3,5-tris(3,5-di-tert-butyl-4-hydroxybenzyl)-2,4,6-trimethyl benzene, 1,4-bis(3,5-di-tert-butyl-4-hydroxy benzyl)-2,3,5,6-tetramethylbenzene, 2,4,6-tris (3,5-di-tert-butyl-4-hydroxybenzyl)phenol. Triazine compounds based antioxidants include 2,4-bis(octylmercapto)-6-(3,5-di-tert-butyl-4-hydroxy anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 2,4,6-tris(3,5-di-tert-butyl-4-hydroxy phenylethyl)-1,3,5-triazine, 1,3,5-tris(3,5-di-tert-butyl-4-hydroxy phenyl propionyl)-hexahydro-1,3,5-triazine and 1,3,5-tris(3,5-dicyclohexyl-4-hydroxy benzyl) isocyanurate. Benzy Iphosphonates, based antioxidants include dimethyl-2,5-di-tert-butyl-4-hydroxybenzyl phosphonate, diethyl-3,5-di-tert-butyl-4-hydroxybenzylphosphonate, diocta decyl3,5-di-tert-butyl-4-hydroxybenzylphosphonate, dioctadecyl-5-tert-butyl-4-hydroxy-3-methyl benzylphosphonate, the calcium salt of the monoethyl ester of 3,5-di-tert-butyl-4-hydroxybenzylphosphonic acid. Acylaminophenol based antioxidants include, for example 4-hydroxylauranilide, 4-hydroxy stearanilide, octyl N-(3,5-di-tert-butyl-4-hydroxyphenyl) carbamate. Exemplary antioxidants include esters of D-(3,5-di-tert-butyl-4-hydroxyphenyl) propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl) oxamide, 3-thiaundecanol, 3-thia pentadecanol, trimethylhexanediol, trimethylol propane, 4-hydroxymethyl-1-phospha-2,6,7-trioxabicyclo[2.2.2]octane. Exemplary antioxidants include esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl) oxamide, 3-thia undecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxyl-1,1-dimethylethyl]-2,4,8,10-tetraoxaspiro[5.5]-undecane. Exemplary antioxidants include esters of β-(3,5-dicyclohexyl-4-hydroxy phenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris (hydroxyethyl) isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane. Exemplary antioxidants include esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl) oxamide, 3-thiaundecanol, 3-thia pentadecanol, trimethylhexanediol, trimethylolpropane, 4-hydroxymethyl-1 -phospha-2,6,7-trioxabicyclo[2.2.2]octane. Exemplary antioxidants include amides of β-(3,5-di-tert-butyl-4-hydroxyphenyl) propionic acid e.g. N,N'-bis(3,5-di-tert-butyl-4-hydroxyphenylpropionyl) hexamethylene diamide, N,N'-bis(3,5-di-tert-butyl-4-hydroxyphenyl propionyl) tri methylenediamide, N,N'-bis(3,5-di-tert-butyl-4-hydroxyphenyl propionyl)hydrazide, N,N'-bis[2-(3-[3,5-di-tert-butyl-4-hydroxyphenyl]propionyloxy)ethyl]oxamide (Naugard^{®} XL-1, supplied by Uniroyal).An exemplary antioxidant is ascorbic acid (vitamin C).Aminic antioxidants include N,N'-di-isopropyl-p-phenylenediamine, N,N'-di-sec-butyl-p-phenylene diamine, N,N'-bis (1,4-dimethylpentyl)-p-phenylenediamine, N,N'-bis(1-ethyl-3-methyl pentyl) -p-phenylene diamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylene diamine, N-isopropyl-N'-phenyl-p-phenylenediamine, N-(1,3-dimethyl butyl)-N'-phenyl-p-phenylenediamine, N-(1-methyl heptyl)-N'-phenyl-p-phenylenediamine, N-cyclohexyl-N'-phenyl-p-phenylenediamine, N,N'-dimethyl-N,N'-di-sec-butyl-p-phenylene diamine, diphenylamine, N-allyldiphenylamine, 4-isopropoxydiphenylamine, N-phenyl-1-naphthyl amine, N-(4-tert-octylphenyl)-1-naphthylamine, N-phenyl-2-naphthylamine, octylated diphenylamine, p,p'-di-tert-octyldiphenylamine, 4-n-butylaminophenol, 4-butyryl amino phenol, 4-nonanoylaminophenol, 4-dodecanoylaminophenol, 4-octa decanoyl aminophenol, bis(4-methoxyphenyl)amine, 2,6-di-tert-butyl-4-dimethylaminomethylphenol, 2,4'-diamino diphenylmethane, 4,4'-diamino diphenylmethane, N,N,N',N'-tetramethyl-4,4'-diamino diphenyl ethane, 1,2-bis[(2-methyl phenyl) amino]ethane, 1,2-bis(phenylamino) propane, (o-tolyl)biguanide, bis[4-(1',3'-dimethylbutyl) phenyl]amine, tert-octylated N-phenyl-1-naphthyl amine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl /isohexyl diphenylamines, a mixture of mono- and dialkylated tert-butyldiphenylamines, N,N,N',N'-tetraphenyl-1,4-diaminobut-2-ene, N,N-bis(2,2,6,6-tetramethylpiperid-4-yl-hexa methylene diamine, bis(2,2,6,6-tetramethylpiperid-4-yl)sebacate, 2,2,6,6-tetramethyl piperidin-4-one, 2,2,6,6-tetramethylpiperidin-4-ol.Phosphoric antioxidants include tetrakis(2,4-di-t-butyl phenyl)-4,4-biphenylene phosphonite, tris(2,4-di-t-butylphenyl) phosphite, 2,2'-methylene bis(4,6-di-t-butylphenyl) octyl phosphite, bis(2,4-di-t-butylphenyl)pentaerythritol diphosphite, bis(2,6-di-t-butyl-4-methylphenyl)pentaerythritol diphosphite, di(nonylphenyl)pentaerythritol diphosphite, phenyl-bisphenol A-pentaerythritol diphosphite, distearylpentaerythritol diphosphite, dioctylpentaerythritol diphosphite, dilaurylpentaerythritol diphosphite, diphenylpentaerythritol diphosphite, dicyclohexylpentaerythritol diphosphite, bis(2,4,6-tri-t-butylphenyl) pentaerythritol diphosphite, 2,2'-ethylidenebis(4,6-di-t-butylphenyl) fluorophosphite, trisindecyl phosphite, trisdodecyl phosphite, phenylisooctyl phosphite, phenylindecyl phosphite, phenyldodecyl phosphite, diphenylisooctyl phosphite, diphenylisodecyl phosphite, diphenyldodecyl phosphite, triphenyl phosphite, tris(monononylphenyl) phosphite and tris(dinonylphenyl)phosphite. The antioxidant may be octadecyl 3,5-di-(tert)-butyl-4-hydroxyhydrocinnamate which is commercially available as IRGANOX 1076 from BASF.

Exemplary antioxidant additives include, for example, organophosphites such as tris(nonyl phenyl)phosphite, tris(2,4-di-t-butylphenyl)phosphite (e.g., "IRGAFOS 168" or "I-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydro cinnamate) methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecyl-thio-dipropionate, octadecyl-3-(3,5-di-tert-butyl-4-hydroxy phenyl)propionate, pentaerythrityl-tetrakis[3-(3,5-di-tert-butyl-4-hydroxyphenyl) propionate or the like; amides of beta-(3,5-di-tert-butyl-4-hydroxyphenyl)-propionic acid or the like, or combinations comprising at least one of the foregoing antioxidants. The antioxidant may be pentaerythritol tetrakis(3-(3,5-di-tert-butyl-4-hydroxyphenyl)propionate), which is commercially available as Irganox 1010.

The antioxidants may be present in the compositions and structures formed therefrom in any amount which retards oxidation of the polymers. The antioxidants may be present in an amount based on the weight of the compositions disclosed of about 100 parts per million or greater, about 200 parts per million or greater, about 300 parts per million or greater, about 500 parts per million or greater or about 1000 parts per million or greater. The antioxidants may be present in an amount based on the weight of the compositions disclosed of about 10,000 parts per million or less, about 8,000 parts per million or less or about 6,000 parts per million or less.

The compositions may contain mold release agents. Exemplary mold release agents include any mold release agent known in the art and combinations thereof. The mold release agents may be internal mold release agents. The mold release agents may include one or more compatibilizing agents such as are taught in now expired United States patent US5,212,209A which is incorporated herein by reference in its entirety for all purposes. Exemplary classes of mold release agent include aliphatic carboxylic acids; esters of an aliphatic carboxylic acid and an alcohol; aliphatic hydrocarbon compounds having a number average molecular weight of 200 to 15,000; and polysiloxane-based silicone oils. Examples of the aliphatic carboxylic acids include saturated or unsaturated, aliphatic monovalent, divalent, or trivalent carboxylic acids. The aliphatic carboxylic acids also include alicyclic carboxylic acids. The aliphatic carboxylic acids may be C ₆₋₃₆ monovalent or divalent carboxylic acids. The aliphatic carboxylic acids may be C ₆₋₃₆ aliphatic saturated monovalent carboxylic acids. Specific examples of such aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanic acid, adipic acid, and azelaic acid. Examples of the aliphatic carboxylic acid in the esters of an aliphatic carboxylic acid and an alcohol include the same aliphatic carboxylic acids as described above. Examples of the alcohol include saturated or unsaturated, monohydric or polyhydric alcohols, which may have a substituent such as a fluorine atom or an aryl group. The alcohols may be monohydric or polyhydric, saturated alcohols having a carbon number of not more than 30. The alcohols may be aliphatic saturated monohydric alcohols and aliphatic saturated polyhydric alcohols having a carbon number of not more than 30. The term "aliphatic" herein is used as a term also including alicyclic compounds. Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylol propane, and dipentaerythritol. Each of the above esters may be either a pure substance or a mixture of a plurality of compounds. Each of the aliphatic carboxylic acid and the alcohol bound to each other to constitute one ester may be of a single type, or two or more types thereof may be used in an arbitrary combination at arbitrary ratios. Specific examples of the ester of the aliphatic carboxylic acid and the alcohol include bees waxes (mixtures containing myricyl palmitate as a major component), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate. Examples of the aliphatic hydrocarbons having a number average molecular weight of 200 to 15,000 include liquid paraffins, paraffin waxes, microwaxes, polyethylene waxes, Fischer-Tropsch waxes, and α-olefin oligomers having a carbon number of 3 to 12. The aliphatic hydrocarbons also include alicyclic hydrocarbons. Each of these hydrocarbons may be partially oxidized. the aliphatic hydrocarbons may be paraffin waxes, polyethylene waxes, and partially oxidized polyethylene waxes are preferred. Paraffin waxes and polyethylene waxes are more preferred. The number average molecular weight of the aliphatic hydrocarbon may not more than 5000. Examples of the polysiloxane-based silicone oils include dimethyl silicone oils, methylphenyl silicone oils, and diphenyl silicone oils. A single type of mold release agent described above may be included, or two or more types of mold release agents described above may be included in an arbitrary combination at arbitrary ratios.

The amount of the mold release agent is not limited and may be about 0.001 percent by weight or greater based on the composition, about 0.01 percent by weight or greater or about 0.1 percent by weight or greater. The amount of the mold release agent is not limited and may be about 2 percent by weight or less based on the weight of the composition, about 1 percent by weight or less, or about 0.6 percent by weight or less. Where the content of the mold release agent is less than the lower limit, the mold-releasing effect may be insufficient, while in cases where the content of the mold release agent exceeds the upper limit of this range, a decrease in the hydrolysis resistance, mold contamination during injection molding, and the like may occur.

The compositions disclosed herein may include an UV absorber (i.e., UV stabilizers) that in one more embodiment function to stabilize the color of the composition. When UV absorbers are added, the polycarbonates, vinylidene substituted aromatic compounds, or both may absorb light energy from UV rays as heat. UV absorbers may reduce weathering in polymeric compositions, such as compositions of polycarbonates and vinylidene substituted aromatic compounds. UV absorbers may include benzotriazoles, hydroxyphenyltriazines, benzophenoses, s-triazines, the like, or any combination thereof. UV absorbers may be present in an amount of about 500 ppm or more, about 1,000 ppm or more, or about 1,500 ppm or more. UV absorbers may be present in about 10,000 ppm or less, about 8,000 ppm or less, or about 6,000 ppm or less. UV absorbers may be present in an amount of about 500 ppm to about 10,000 ppm.

The fillers may be reinforcing fillers, such as fibers having a length to diameter ratio of about 4 or more. The amount of other fillers (e.g., non-reinforcing fillers, such as talc, clay, etc.) may be about 10 weight percent or less, about 6 weight percent or less, about 4 weight percent or less, about 2 weight percent or less or about 1 weight percent or less, based on the total weight of the composition. The amount of other fillers may be greater than 0 weight percent or about 1 weight percent or greater, based on the total weight of the composition. The fillers may be present in an for improving the strength of the composition and/or for reducing the coefficient of linear thermal expansion of the composition. The reinforcing filler may include a glass fiber, a carbon fiber, a metal fiber, or any combination thereof. Other reinforcing fillers include mineral fillers having a needle-like structure (acicular structure), such as wollastonite. The composition may optionally include a component which adsorbs volatile organic compounds. The component may be a zeolite, activated carbon, bamboo, charcoal or combinations thereof.

The disclosed compositions may contain one or more additives that are commonly used in compositions of this type. Exemplary additives include: zinc salts, colorants, stabilizers, adsorbers (e.g., zeolites, activated carbon, bamboo charcoal, etc.), antistatic agents, silicon oils, flow enhancers, etc. Additives and/or adsorbents may be present in the compositions in an amount about 0.01 percent by weight or greater, about 0.1 percent by weight or greater, about 1 percent by weight or greater, about 2 percent by weight or greater, or about 3 percent by weight or greater based on the weight of the compositions. The additives and/or fillers may be present in an amount of about 40 percent by weight or less, about 30 percent by weight or less, about 20 percent by weight or less, about 15 percent by weight or less, about 10 percent by weight or less, about 5 percent by weight or less based on the weight of the composition. The additives and adsorbents may be independently present in amounts up to about 5 weight percent while fillers may be present in amounts up to about 40 weight percent based on the weight of the compositions.

The compositions disclosed may be produced by mixing the components in a known manner and melt-compounding and/or melt-extruding them at temperatures of from 250°C to 400°C in conventional units such as internal kneaders, extruders and twin-screw extruders. The individual components may be mixed in a known manner both in succession and simultaneously and both at approximately 23°C (room temperature) and at a higher temperature. The mixing may be performed for a time sufficient to form a homogeneous mixture of the components, The mixing time may be about 10 seconds or greater, 20 second or greater of about 30 seconds or greater. The mixing time may be 600 seconds or less.

The disclosed compositions may be molded using any procedure known in the art. The polycarbonate compositions may be molded into useful shaped articles by a variety of means such as injection molding, overmolding, extrusion, rotational molding, blow molding and thermoforming to form various molded articles. Such articles may include thin-walled articles for consumer goods like cellphones, MP3 players, computers, laptops, cameras, video recorders, electronic tablets, hand receivers, kitchen appliances, electrical housings, etc., e.g. a smart meter housing, and the like; electrical connectors, and components of lighting fixtures, omaments, home appliances, roofs, greenhouses, sun rooms, swimming pool enclosures, Light Emitting Diodes (LEDs) and light panels, extruded film and sheet articles; electrical parts, such as relays; and telecommunications parts such as parts for base station terminals. The present disclosure further contemplates additional fabrication operations on said articles, such as, but not limited to, molding, in-mold decoration, baking in a paint oven, lamination, and/or thermoforming. The compositions disclosed are heated to temperatures at which the composition flows, which may be above the glass transition temperatures of the polycarbonates in the composition. Such temperatures may be greater than 155 °C, above 200 °C or greater, 250 °C or greater. Such temperatures may be 400 °C or less or 300 °C or less. The mold may be heated to facilitate processing such as to 50 °C or greater, 80 °C or greater or 100 °C or greater.

The UL-94 vertical test (20 mm vertical burn test) in the UL standards is a measuring method used for an index of flame retardancy in an unexpanded resin. The purpose of the test is to determine the resistance of plastic materials used for parts in devices and appliances to flame and glow propagation. UL 94 is used to measure burning rate and characteristics based on standard samples. Sample size is 12.7mm by 127mm, with the thickness varying. Thickness must be reported when a rating is given. The relevant ratings are: V-2, V-1 and V-0. "V-0" is the most common rating seen parts where increases in protection from combustion is required. V-0 carries the following requirements:
1. None of the five samples can have flaming combustion for more than 10 seconds after each of two 10 second flame applications.
2. The total flaming combustion time for the ten 10 second flame applications (5 samples, 2 applications each) of more than 50 seconds.
3. None of the five samples may burn with flaming or glowing combustion up to the holding clamp.
4. None of the five samples may drip flaming particles which ignite dry absorbent cotton located 305 mm below the sample.
5. None of the five samples may have glowing combustion which persists for more than 30 seconds after the second removal of the flame.

The other ratings have a similar format. The most significant difference in the ratings are the times the samples are allowed to support flaming or glowing combustion. The flame application time is the same. Here is a short summary of the V-0, V-1 and V-2 required results: V-0 burning stops within 10 seconds after two applications of ten seconds each of a flame to a test bar and no flaming drips are allowed; V-1 burning stops within 60 seconds after two applications of ten seconds each of a flame to a test bar, and no flaming drips are allowed; and V-2 burning stops within 60 seconds after two applications of ten seconds each of a flame to a test bar and flaming drips are allowed.

The test procedure is summarized here. Test specimens having a specific size are perpendicularly attached to a clamp, flame contact is performed for 10 seconds by 20 mm flame. Each of five specimens is clamped 300 mm above a layer of dry cotton. A calibrated flame is applied to the bottom edge of the vertically supported test bar for 10 seconds and any after flame time (t1) is noted. When after flaming ceases the flame is reapplied for an additional 10 seconds and after flame time (t2) and afterglow time (t3) is noted. If one specimen fails, a second set of five can be tested. More details can be acquired by contacting UL or obtaining a copy of this and other UL Standards by visiting the UL's Standards Department web site, at http://ulstandardsinfonet.ul.com. Table 1 defines the specific criteria for V-0, V-1 and V-2 ratings.

**Table 1**

| Criteria Conditions | V-0 | V-1 | V-2 |
|---|---|---|---|
| Afterflame time for each individual specimen T1 or T2, | ≦10 s | ≦30 s | ≦30 s |
| Total afterflame time for any condition set (T1 plus T2 for the 5 specimens) | ≦50 s | ≦250 s | ≦250 s |
| Afterflame plus afterglow time for each individual flame application (T2 + T3) | ≦30 s | ≦60 s | ≦60 s |
| Afterflame or afterglow of any specimen up to the holding clamp | No | No | No |
| Cotton indicator ignited by flaming particles or drops | No | No | Yes |

### Illustrations

1. A composition comprising: a) one or more polycarbonates; b) one or more non-halogen containing flame retardants; c) one or more glass fibers; and d) one or more of one or more polysiloxane impact modifiers and one or more polysiloxane polycarbonate copolymers.
2. The composition of illustration 1, wherein the composition comprises about 40 to about 99 percent by weight of the one or more polycarbonates, based on the weight of the composition.
3. The composition of illustration 1 or 2, wherein the one or more polycarbonates comprises one or more virgin polycarbonates, one or more post-consumer recycled polycarbonates, or combination thereof.
4. The composition of any one of illustrations 1-3, wherein the composition comprises one or more post-consumer recycled polycarbonates.
5. The composition of any one of the preceding illustrations, wherein the composition comprises about 0 to about 99 percent by weight of one or more post-consumer recycled polycarbonates, based on the weight of the composition.
6. The composition of any one of the preceding illustrations, wherein the composition comprises about 10 to about 80 percent by weight of one or more post-consumer recycled polycarbonates, based on the weight of the composition.
7. The composition of any one of the preceding illustrations, wherein the composition comprises one or more virgin polycarbonates.
8. The composition of any one of the preceding illustrations, wherein the one or more polycarbonates is branched, linear, or a combination thereof.
9. The composition of any one of the preceding illustrations, wherein the one or more polycarbonates contain substantially all polycarbonate units.
10. The composition of any one of the preceding illustrations, wherein the one or more polycarbonates contain substantially all bisphenol polycarbonate units.
11. The composition of any one of the preceding illustrations, wherein the composition comprises about 0.1 to less than about 20 percent by weight of one or more non-halogen containing flame retardants, based on the weight of the composition.
12. The composition of any one of the preceding illustrations, wherein the composition comprises about 2 to less than about 15 percent by weight of one or more non-halogen containing flame retardants, based on the weight of the composition.
13. The composition of any one of the preceding illustrations, wherein the one or more non-halogen containing flame retardants is one or more phosphorus containing flame retardants.
14. The composition of any one of the preceding illustrations, wherein the one or more phosphorus containing flame retardant comprises one or more of a phosphate ester, a phosphazene, or a combination thereof.
15. The composition of any one of the preceding illustrations, wherein the one or more phosphorus containing flame retardant is one or more of 1, 3-phenylenetetrakis (2, 6-dimethylphenyl) ester, hexa-phenoxy-cyclo-phosphazene, or a combination thereof.
16. The composition of any one of the preceding illustrations, wherein the composition comprises about 1.0 to about 50 percent by weight of one or more glass fibers, based on the weight of the composition.
17. The composition of any one of the preceding illustrations, wherein the composition comprises about 5.0 to about 45 percent by weight of one or more glass fibers, based on the weight of the composition.
18. The composition of any one of the preceding illustrations, wherein the glass fibers are circular shaped, oval shaped, or a combination thereof.
19. The composition of any one of the preceding illustrations, wherein the glass fibers are one or more virgin glass fibers, one or more recycled glass fibers, or a combination thereof.
20. The composition of any one of the preceding illustrations, wherein the glass fibers are one or more recycled glass fibers.
21. The composition of any one of the preceding illustrations, wherein the recycled glass fibers are one or more pre-consumer recycled glass fibers, one or more post-industrial recycled glass fibers, or a combination thereof.
22. The composition of any one of the preceding illustrations, wherein the composition comprises one or more polysiloxane impact modifiers.
23. The composition of any one of the preceding illustrations, wherein the composition comprises one or more polysiloxane polycarbonate copolymers.
24. The composition of any one of the preceding illustrations, comprising either one or more impact modifiers or one or more polysiloxane polycarbonate copolymers.
25. The composition of any one of the preceding illustrations, wherein the composition comprises about 0 to about 10.0 percent by weight, based on the weight of the composition of one or more polysiloxane impact modifiers.
26. The composition of any one of the preceding illustrations, wherein the composition comprises about 2 to about 6 percent by weight of one or more polysiloxane impact modifiers, based on the weight of the composition.
27. The composition of any one of the preceding illustrations, wherein the composition comprises about 0 to about 90 percent by weight of one or more polysiloxane polycarbonate copolymers, based on the weight of the composition, and the total amount of polycarbonates stated include the one or more polysiloxane polycarbonate copolymers.
28. The composition of any one of the preceding illustrations, wherein the composition comprises greater than 1.0 to about 90 percent by weight of one or more polysiloxane polycarbonate copolymers, based on the weight of the composition, and the total amount of polycarbonates stated include the one or more polysiloxane polycarbonate copolymers.
29. The composition of any one of the preceding illustrations, wherein the composition comprises one or more inorganic particles.
30. The composition of any one of the preceding illustrations, wherein the one or more inorganic particles comprise one or more carbon based particulates, metal oxides and metalloid oxides.
31. The composition of any one of the preceding illustrations, wherein the one or more inorganic particles comprise one or more of carbon nanotubes, carbon black, titanium dioxide, magnesium oxide, silicon dioxide, mica, talc and wollastonite.
32. The composition of any one of the preceding illustrations, wherein the one or more inorganic particles are present in an amount of about 0 to about 20 percent by weight, based on the weight of the composition.
33. The composition of any one of the preceding illustrations, wherein the composition comprises about 0.5 to about 10 percent by weight of one or more inorganic particles, based on the weight of the composition.
34. The composition of any one of the preceding illustrations, wherein the composition comprises one or more buffer compounds capable of stabilizing the molecular weight of the one or more polycarbonates.
35. The composition of any one of the preceding illustrations, wherein the one or more buffer compounds comprise one or more alkali metal phosphates.
36. The composition of any one of the preceding illustrations, wherein the one or more buffer compounds are present in an amount of about 0 to about 0.2 percent by weight, based on the weight of the composition.
37. The composition of any one of the preceding illustrations, wherein the one or more buffer compounds are present in an amount of about 0.01 to about 0.1 percent by weight, based on the weight of the composition.
38. The composition of any one of the preceding illustrations, wherein the one or more alkali metal phosphates comprise one or more of distearyl pentaerythritol diphosphate, mono or dihydrogen phosphate and mono-, di-, or trihydrogen phosphate compounds.
39. The composition of any one of the preceding illustrations, wherein the one or more alkali metal phosphates comprise one or more mono-, di-, or trihydrogen phosphate compounds.
40. The composition of any one of the preceding illustrations, wherein the one or more alkali metal phosphates comprise sodium dihydrogen phosphate.
41. The composition of any one of the preceding illustrations, wherein the composition comprises one or more of one or more antioxidants, one or more UV Absorbers, one or more mold release agents, and one or more colorants.
42. The composition of any one of the preceding illustrations, wherein the composition comprises one or more antioxidants.
43. The composition of any one of the preceding illustrations, wherein the one or more antioxidants may be present in an amount of about 0.1 to about 1.0 percent by weight, based on the weight of the composition of the one or more antioxidants.
44. The composition of any one of the preceding illustrations, wherein the one or more antioxidants comprise one or more of Tris(2,4-di-tert-butylphenyl) phosphite, Octadecyl 3-(3,5-di-tert-butyl-4-hydroxyphenyl)propionate, and Pentaerythritol tetrakis(3-(3,5-di-tert-butyl-4-hydroxyphenyl)propionate).
45. The composition of any one of the preceding illustrations, wherein the composition comprises one or more UV Absorbers.
46. The composition of any one of the preceding illustrations, wherein the one or more UV Absorbers comprises one or more of 2-(2H-benzotriazol-2-yl)-4,6-bis(1-methyl-1-phenylethyl)phenol; 2,2'-Methylenebis[6-(2H-benzotriazol-2-yl)-4-(1,1,3,3-tetramethylbutyl)phenol]; 2-(2H-Benzotriazol-2-yl)-4-(1,1,3,3-tetramethylbutyl)phenol; and Phenol, 2-(4,6-Diphenyl-1,3,5-triazin-2-yl)-5-hexyloxy.
47. The composition of any one of the preceding illustrations, wherein the composition comprises one or more mold release agents.
48. The composition of any one of the preceding illustrations, wherein the one or more mold release agents comprises one or more of stearic acids, and stearates.
49. The composition of any one of the preceding illustrations, wherein the composition comprises: a) from about 40 to about 99 percent by weight of one or more polycarbonates; b) from about 0.1 to less than about 20 percent by weight of one or more non-halogen containing flame retardants; c) from about 1.0 to about 50 percent by weight of one or more glass fibers; d) from about 0 to about 10 percent by weight of one or more polysiloxane impact modifiers; and e) from about 0 to about 90 one or more polysiloxane polycarbonate copolymers, wherein the amounts are by weight based on the weight of the composition, and the total amount of polycarbonates stated include the one or more polysiloxane polycarbonate copolymers.
50. The composition of any one of the preceding illustrations, wherein the composition comprises: a) from about 40 to about 99 percent by weight of one or more polycarbonates; b) from about 0.1 to less than about 20 percent by weight of one or more non-halogen containing flame retardants; c) from about 1.0 to about 50 percent by weight of one or more glass fibers; d) from about 0 to about 10 percent by weight of one or more polysiloxane impact modifiers; e) from about 0 to about 90 one or more polysiloxane polycarbonate copolymers; and f) from about 0 to about 10 percent by weight of one or more inorganic particles, wherein the amounts are by weight based on the weight of the composition, and the total amount of polycarbonates stated include the one or more polysiloxane polycarbonate copolymers.
51. The composition of any one of the preceding illustrations, wherein the composition comprises: a) from about 40 to about 99 percent by weight of one or more polycarbonates; b) from about 0.1 to less than about 20 percent by weight of one or more non-halogen containing flame retardants; c) from about 1.0 to about 50 percent by weight of one or more glass fibers; d) from about 0 to about 10 percent by weight of one or more polysiloxane impact modifiers; e) from about 0 to about 90 one or more polysiloxane polycarbonate copolymers; f) from about 0 to about 20 percent by weight of one or more inorganic particles; and g) from about 0 to about 0.2 percent by weight of one or more buffer compounds, wherein the amounts are by weight based on the weight of the composition, and the total amount of polycarbonates stated include the one or more polysiloxane polycarbonate copolymers.
52. The composition of any one of the preceding illustrations, wherein the composition comprises: a) from about 40 to about 99 percent by weight of one or more polycarbonates; b) from about 0.1 to less than about 20 percent by weight of one or more non-halogen containing flame retardants; c) from about 1.0 to about 50 percent by weight of one or more glass fibers; and d) from about 0.5 to about 10percent by weight of one or more polysiloxane impact modifiers, wherein the amounts are by weight based on the weight of the composition.
53. The composition of any one of illustrations 1-46, wherein the composition comprises: a) from about 40 to about 99 percent by weight of one or more polycarbonates; b) from about 0.1to less than about 20 percent by weight of one or more non-halogen containing flame retardants; c) from about 1.0 to about 50 percent by weight of one or more glass fibers; and e) from greater than 1.0 to about 90 one or more polysiloxane polycarbonate copolymers, wherein the amounts are by weight based on the weight of the composition, and the total amount of polycarbonates stated include the one or more polysiloxane polycarbonate copolymers.
54. The composition of any one of the preceding illustrations, wherein articles prepared from the compositions achieve UL94 V0@1.5 mm flame retardancy.
55. A method comprising a) contacting the elements of any one of illustrations 1 to 53, with intimate mixing at a temperature of about 250 °C or greater for about 10 seconds or greater, b) filling a mold with the mixed composition of a), and c) allowing the composition in the mold to form a solid article, and d) removing the formed article from the mold.
56. A method according to illustration 55, wherein the contacting with mixing is performed in an extruder and the formed mixture is moved from the extruder to a mold.
57. An article prepared from a composition according to any one of illustrations 1 to 54 exhibiting a UL94 V0@1.5 mm flame retardancy.

### Illustrative Examples

The following examples are provided to illustrate the invention but are not intended to limit the scope thereof. All parts and percentages are by weight unless otherwise indicated.

Illustrated are flame retardant polycarbonate compositions not formulated with PFAS containing additives, containing glass fibers.

Specimens for examples X1-X14 are prepared by the following procedure. The components defined in Table 2 (X1-X5) and Table 3 (X6-X14) below are combined in an extruder and mixed in the extruder. The compositions are compounded and granulated on a twin-screw extruder (Coperion ZSK-26) at a speed of ~350 rpm at a throughput of 60 kg/h at 290°C. The formed homogeneous mixtures are extruded and pelletized. The pellets are molded into test specimen according to the test procedures for the UL test described above.

### Ingredients

PCR - Post-consumer recycle Polycarbonate - Melt flow rate = 15; Mw=24,500 a.m.u.
PC1 - PC200-15 Polycarbonate Melt flow rate = 15; Mw=24,500 a.m.u.
PC2 - PC600-3 Polycarbonate Melt flow rate = 3; Mw=35,000 a.m.u.
PC3 - S2000F Polycarbonate powder Mw=27,000 a.m.u.
PC-SIL - S2060 PC-siloxane copolymer Melt flow rate = 1; Siloxane content 20%
CSR - MR03 silicone-based graft copolymer, containing more than 70 wt.% of a silicone core component with a graft polymer component shell derived from mainly acrylic ester monomer.
FR1 - HPCTP Phosphazene based Flame Retardant
FR2 - PX200 Phosphorus based Flame Retardant
MR1 - L-3820 is fatty acid ester based mold release agent
AO1 - IR2112 Tris(2,4-di-tert-butylphenyl) phosphite.
AO2 - IR 1010- Pentaerythritol tetrakis(3-(3,5-di-tert-butyl-4-hydroxyphenyl)propionate).
UVA1 - UV1577 UV absorber- Phenol, 2-(4,6-Diphenyl-1,3,5-triazin-2-yl)-5-hexyloxy.
MSP - Sodium dihydrogenorthophosphate.
TiO₂ - Titanium Dioxide.
CB - BP-800 is Carbon Black.
GF- GF 936 is Glass Fiber.

**Table 2**

| | X1 | X2 | X3 | X4 | X5 |
|---|---|---|---|---|---|
| PCR | 48.53 | 50.88 | 51.53 | 53.88 | |
| PC1 | | | | | 51.53 |
| PC2 | 20.00 | 20.00 | 20.00 | 20.00 | 20.00 |
| PC3 | 10.00 | 10.00 | | | |
| PC-SIL | | | 10.00 | 10.00 | 10.00 |
| CSR | 3.00 | 3.00 | | | |
| FR1 | 5.00 | 5.00 | 5.00 | 5.00 | 5.00 |
| FR2 | | | | | |
| MR1 | 0.40 | 0.40 | 0.40 | 0.40 | 0.40 |
| AO1 | 0.10 | 0.10 | 0.10 | 0.10 | 0.10 |
| AO2 | 0.10 | 0.10 | 0.10 | 0.10 | 0.10 |
| UVA1 | 0.25 | | 0.25 | | 0.25 |
| MSP | 0.02 | 0.02 | 0.02 | 0.02 | 0.02 |
| TiO2 | 2.60 | | 2.60 | | 2.60 |
| CB | | 0.50 | | 0.50 | |
| GF | 10.00 | 10.00 | 10.00 | 10.00 | 10.00 |
| Total | 100.00 | 100.00 | 100.00 | 100.00 | 100.00 |
| UL94 (1.5mm) | V2 | V0 | V0 | V0 | V0 |

X1 and X2 demonstrate a composition containing post-consumer recycled polycarbonate and the combination of HPCTP (FR1) and MR03 (CSR) achieves good flame retardancy without adding PFAS chemical to the composition, and TiO2 adversely impacts the flame retardancy of a composition with HPCTP (FR1) and MR03 (CSR). X3 and X4 demonstrate a composition containing post-consumer recycled polycarbonate and the combination of HPCTP (FR1) and S2060 (PC-SIL), can achieve good flame retardancy without adding PFAS chemical to the composition and the use of either TiO2 or carbon black does not impact the flame retardancy of a composition with HPCTP (FR1) and S2060 (PC-SIL). X5 demonstrates good flame retardancy is maintained in a composition containing virgin polycarbonate and the combination of HPCTP (FR1) and S2060 (PC-SIL).

**Table 3**

| | X6 | X7 | X8 | X9 | X10 | X11 | X12 | X13 | X14 |
|---|---|---|---|---|---|---|---|---|---|
| PCR | 48.53 | 50.88 | 51.53 | 53.88 | 46.53 | 48.88 | 49.53 | 51.88 | |
| PC1 | | | | | | | | | 49.53 |
| PC2 | 20.00 | 20.00 | 20.00 | 20.00 | 20.00 | 20.00 | 20.00 | 20.00 | 20.00 |
| PC3 | 10.00 | 10.00 | | | 10.00 | 10.00 | | | |
| PC-SIL | | | 10.00 | 10.00 | | | 10.00 | 10.00 | 10.00 |
| CSR | 3.00 | 3.00 | | | 3.00 | 3.00 | | | |
| FR1 | | | | | | | | | |
| FR2 | 5.00 | 5.00 | 5.00 | 5.00 | 7.00 | 7.00 | 7.00 | 7.00 | 7.00 |
| MR1 | 0.40 | 0.40 | 0.40 | 0.40 | 0.40 | 0.40 | 0.40 | 0.40 | 0.40 |
| AO1 | 0.10 | 0.10 | 0.10 | 0.10 | 0.10 | 0.10 | 0.10 | 0.10 | 0.10 |
| AO2 | 0.10 | 0.10 | 0.10 | 0.10 | 0.10 | 0.10 | 0.10 | 0.10 | 0.10 |
| UVA1 | 0.25 | | 0.25 | | 0.25 | | 0.25 | | 0.25 |
| MSP | 0.02 | 0.02 | 0.02 | 0.02 | 0.02 | 0.02 | 0.02 | 0.02 | 0.02 |
| TiO2 | 2.60 | | 2.60 | | 2.60 | | 2.60 | | 2.60 |
| CB | | 0.50 | | 0.50 | | 0.50 | | 0.50 | |
| GF | 10.00 | 10.00 | 10.00 | 10.00 | 10.00 | 10.00 | 10.00 | 10.00 | 10.00 |
| Total | 100.00 | 100.00 | 100.00 | 100 | 100.00 | 100.00 | 100.00 | 100 | 100.00 |
| UL94 (1.5mm) | V2 | V0 | V0 | V0 | V0 | V0 | V0 | V0 | V0 |

X6 and X7 demonstrate a composition containing post-consumer recycled polycarbonate and the combination of PX200 (FR2) and MR03 (CSR) achieves good flame retardancy without adding PFAS chemical to the composition, and TiO2 adversely impacts the flame retardancy of a composition with PX200 (FR2) and MR03 (CSR). X8-X13 demonstrate a composition containing post-consumer recycled polycarbonate and the combination of PX200 (FR2) and S2060 (PC-SIL) can achieve good flame retardancy, and the use of either TiO2 or carbon black does not impact the flame retardancy of a composition with PX200 (FR2) and S2060 (PC-SIL). X14 demonstrates good flame retardancy, is maintained in a composition containing virgin polycarbonate and the combination of PX200 (FR2) and S2060 (PC-SIL).

## Claims

1. A composition comprising:
a) one or more polycarbonates;
b) one or more non-halogen containing flame retardants;
c) one or more glass fibers; and one or more of
d) one or more polysiloxane impact modifiers and e) one or more polysiloxane polycarbonate copolymers.

2. The composition of claim 1, wherein the composition comprises about 40 to about 99 percent by weight of the one or more polycarbonates, based on the weight of the composition; the one or more polycarbonates comprises one or more virgin polycarbonates, one or more post-consumer recycled polycarbonates, or combination thereof; and the one or more polycarbonates is branched, linear, or a combination thereof.

3. The composition of claim 1 or 2, wherein the composition comprises about 0 to about 99 percent by weight of one or more post-consumer recycled polycarbonates, based on the weight of the composition.

4. The composition of any one of the preceding claims, wherein the composition comprises about 0.1 to less than about 20 percent by weight of one or more non-halogen containing flame retardants, based on the weight of the composition.

5. The composition of any one of the preceding claims, wherein the one or more non-halogen containing flame retardants is one or more phosphorus containing flame retardants.

6. The composition of any one of the preceding claims, wherein the composition comprises about 1.0 to about 50 percent by weight of one or more glass fibers, based on the weight of the composition; the glass fibers are circular shaped, oval shaped, or a combination thereof; and glass fibers are one or more virgin glass fibers, one or more recycled glass fibers, or a combination thereof.

7. The composition of any one of the preceding claims, wherein the composition comprises about 0 to about 10.0 percent by weight, based on the weight of the composition of one or more polysiloxane impact modifiers; the composition comprises about 0 to about 90 percent by weight of one or more polysiloxane polycarbonate copolymers, based on the weight of the composition, and the total amount of polycarbonates stated include the one or more polysiloxane polycarbonate copolymers one or more polysiloxane polycarbonate copolymers, wherein at least one of the d) one or more polysiloxane impact modifiers; or e) one or more polysiloxane polycarbonate copolymers are present in an amount of greater than 0.

8. The composition of any one of the preceding claims, wherein the composition comprises about 10 to about 80 percent by weight of one or more post-consumer recycled polycarbonates, based on the weight of the composition.

9. The composition of any one of the preceding claims, wherein the composition comprises about greater than 0 to about 20 percent by weight, based on the weight of the composition of one or more inorganic particles, and the one or more inorganic particles comprise one or more carbon based particulates, metal oxides and metalloid oxides.

10. The composition of any one of the preceding claims, wherein the composition comprises one or more buffer compounds capable of stabilizing the molecular weight of the one or more polycarbonates.

11. The composition of any one of the preceding claims, wherein the composition comprises one or more of one or more antioxidants, one or more UV Absorbers, one or more mold release agents, and one or more colorants.

12. The composition of any one of the preceding claims, wherein the composition comprises:
a) from about 40 to about 99 percent by weight of one or more polycarbonates;
b) from about 0.1 to less than about 20 percent by weight of one or more non-halogen containing flame retardants;
c) from about 1.0 to about 50 percent by weight of one or more glass fibers;
d) from about 0 to about 10 percent by weight of one or more polysiloxane impact modifiers;
e) from about 0 to about 90 one or more polysiloxane polycarbonate copolymers;
f) from about 0 to about 20 percent by weight of one or more inorganic particles; and
g) from about 0 to about 0.5 percent by weight of one or more buffer compounds, wherein the amounts are by weight based on the weight of the composition, and the total amount of polycarbonates stated include the one or more polysiloxane polycarbonate copolymers, wherein at least one of the d) one or more polysiloxane impact modifiers; or e) one or more polysiloxane polycarbonate copolymers are be present in an amount of greater than 0.

13. A method comprising a) contacting the elements of any one of claims 1 to12, with intimate mixing at a temperature of about 250 °C or greater for about 10 seconds or greater, b) filling a mold with the mixed composition of a), and c) allowing the composition in the mold to form a solid article, and d) removing the formed article from the mold.

14. A method according to claim 13, wherein the contacting with mixing is performed in an extruder and the formed mixture is moved from the extruder to a mold.

15. An article prepared from a composition according to any one of claims 1 to 12 exhibiting a UL94 V0@1.5 mm flame retardancy.
